Europäisches Patentamt

European Patent Office

Office européen des brevets

(19)

(11) Numéro de publication: **0 131 516**
**B1**

(12) **FASCICULE DE BREVET EUROPEEN**

(45) Date de publication du fascicule du brevet: **14.12.88**

(51) Int. Cl.⁴: **G 01 V 3/24**

(21) Numéro de dépôt: **84401435.7**

(22) Date de dépôt: **06.07.84**

(54) Procédé et appareil pour la mesure de la résistivité de formations géologiques.

(30) Priorité: **06.07.83 US 511413**
**06.07.83 US 511414**

(43) Date de publication de la demande:
**16.01.85 Bulletin 85/03**

(45) Mention de la délivrance du brevet:
**14.12.88 Bulletin 88/50**

(84) Etats contractants désignés:
**AT DE FR GB IT NL SE**

(56) Documents cités:
**GB-A-2 001 442**
**US-A-2 842 735**
**US-A-3 060 373**

(73) Titulaire: **SOCIETE DE PROSPECTION
ELECTRIQUE SCHLUMBERGER
42, rue Saint-Dominique
F-75340 Paris Cédex 07 (FR)**

(84) **FR IT**

(73) Titulaire: **Schlumberger Limited
277 Park Avenue
New York, N.Y. 10172 (US)**

(84) **DE GB NL SE AT**

(72) Inventeur: **Grimaldi, Pierre
32, rue d'Yerres
F-94440 Villecresnes (FR)**
Inventeur: **Trouiller, Jean-Claude
3, rue Molière
F-78470 St. Rémy (FR)**
Inventeur: **Gouilloud, Michel
Silvermine Tarvern Perry Avenue
Norwalk Connecticut 06850 (US)**
Inventeur: **Locke, Stanley
17 Deerwoood Court
Norwalk Connecticut 06851 (US)**

(74) Mandataire: **Chareyron, Lucien et al
Schlumberger Limited Service Brevets c/o Giers
12, place des Etats Unis B.P. 121
F-92124 Montrouge Cédex (FR)**

Courier Press, Leamington Spa, England.

**Description**

La présente invention concerne d'une manière générale la mesure de résistivité de formations géologiques à partir d'un forage traversant ces formations, et plus précisément, la mesure de la résistivité et/ou de l'épaisseur d'une ou plusieurs zones entourant le forage.

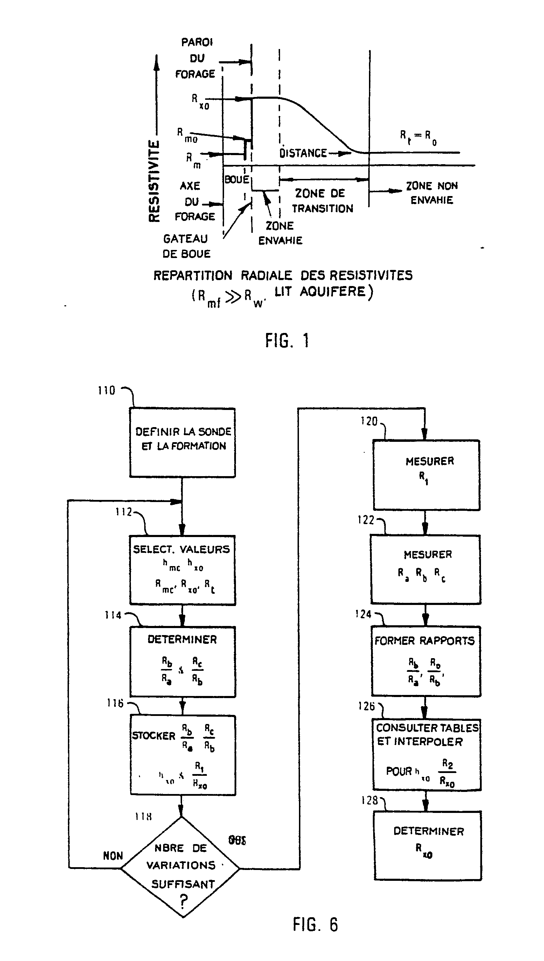

Dans de nombreuses opérations de forage, la boue présente dans le forage se trouve dans des conditions telles que la pression hydrostatique de la colonne de boue est supérieure à la pression des fluides des formations. L'effet de ces conditions est illustré dans la figure 1, qui représente un exemple de répartition radiale des résistivités dans un lit aquifère.

La pression différentielle contraint le filtrat de boue à envahir les formations perméables traversées par le forage, de sorte que des particules solides de la boue se déposent sur la paroi du forage en formant un gâteau de boue de résistivite $R_{mc}$. En général, ce gâteau de boue présente un très faible résistivité et réduit considérablement la taux d'infiltration au fur et à mesure qu'il se forme. Cependant, dans la zone des formations entourant immédiatement le forage, la totalité de l'eau des formations et une partie des hydrocarbures éventuellement présents, sont chassés par le filtrat. Cette zone est appelée la zone envahie et sa résistivité est exprimée par $R_{xo}$. A plus grande distance du forage, le déplacement des fluides des formations est moins important et moins complet, ce qui conduit à une zone de transition dans laquelle il se produit une variation progressive de la résistivité, de $R_{xo}$ à la résistivité de la formation non envahie $R_t$. La profondeur latérale d'invasion dépend en partie de la perméabilité de la formation et est très variable, allant de moins d'un centimètre à plusieurs dizaines de centimètres.

Les mesures de $R_{xo}$ sont importantes pour plusieurs raisons. Lorsque l'invasion est modérée à profonde, la connaissance de $R_{xo}$ permet de déterminer de façon plus précise la vraie résistivité $R_t$ qui est liée à la saturation en hydrocarbures. De plus, certains procédés de calcul de la saturation utilisent comme paramètres le rapport $R_{xo}/R_t$. De même, dans des formations propres, une valeur du facteur de formation F peut être calculée à partir de $R_{xo}$ et de la résistivité du filtrat de boue "$R_{mf}$", si l'on connaît ou si l'on peut estimer la saturation du filtrat de boue "$S_{xo}$" A partir de F, on peut déterminer une valeur de la porosité. Une application plus récente des données de $R_{xo}$ a trait à l'évaluation complète des effets des hydrocarbures sur les diagrammes de neutrons et de densité, et font partie intégrante des services SARABAND$^{-TM}$ et CORIBAND$^{-TM}$ fournis par la Schlumberger Technology Corporation, Houston, Texas. En outre, la comparaison de $R_{xo}$ et de $R_t$ est utile pour la connaissance de la mobilité des hydrocarbures.

Non seulement l'art antérieur a permis de démontrer l'utilité de la mesure de $R_{xo}$, mais il s'est également intéresse à l'acquisition d'informations indicatrices des positions de discontinuités latérales de résistivités électriques des matériaux entourant le forage, pour déterminer le diamètre du forage et la profondeur d'invasion des fluides. A titre d'exemple, le brevet américain No. 2.754.475 (inventeur déclaré: Norelius; délivré le 10 juillet 1956), indique que des mesures de résistance peuvent être faites à des profondeurs latérales variant de façon continue dans le forage et la formation entourant le forage, en mesurant en plusieurs points du forage la résistivité moyenne de la formation et du fluide du forage contenu à l'intérieur d'enveloppes sphériques respectives. Ces enveloppes sont établies par un champ électrique convergeant de façon pratiquement radiale à travers les forma- toins adjacentes vers une électrode d'entrée située dans le fluide à l'intérieure du puits de forage. Le rayon du forage, la profondeur d'invation et la position de la formation envahie, peuvent être déterminés par identification des éventuelles discontinuités apparaissant dans le diagramme.

Cependant, les spécialistes ont établi qu'un dispositif à patin venant au contact de la paroi était le plus approprié a la mesure d'invasions de faibles profondeurs. De nombreux dispositifs de ce type ont été proposés, dont l'un est décrit dans le brevet américain No. 2.669.688 (Doll, délivré le 16 février 1954). L'un des modes de réalisation décrit dans le brevet Doll no. 2.669.688 met en jeu un systéme à trois électrodes comprenant une électrode de courant et deux électrodes de mesure du potentiel, le retour du courant s'effectuant par le câble. Les mesures réalisées avec ce système sont représentatives des résistivités à des profondeurs latérales d'investigation différentes et de faible valeur. L'une des profondeurs d'investigation est approximativement égale à l'épaisseur probable du gâteau de boue sur la paroi du forage, l'autre étant légèrement supérieure, de façon à inclure le gâteau de boue et au moins une partie de la zone adjacente de la formation qui a été envahie par la filtrat de boue. Comme la présence du gâteau de boue sur la paroi d'un forage est une indication d'infiltration de la formation par le filtrat de boue, l'interprétation des mesures ainsi faites permet d'identifier les formations perméables. Une troisième mesure à une autre profondeur latérale d'investigation de faible valeur facilite aussi l'identification de formation perméables. Voir par exemple le brevet américain No. 2.965.838 (Kister, délivré le 20 décembre 1960).

Cependant, pour mesure de façon précise la valeur de $R_{xo}$, la mesure ne doit pas être perturbée par le forage ou doit pouvoir être corrigée. Des mesures effectuées à différentes profondeurs d'investigation latérale de faibles valeurs peuvent être corrigées lorsque au moins l'une des mesures fournit avec précision la résistivité du gâteau de boue. Voir par exemple le brevet de Kister. Les effets du forage sur les mesures de $R_{xo}$ peuvent cependant être minimisés par l'utilisation de courants de focalisation pour agir sur le trajet parcouru par le courant d'analyse. Les effets du forage, d'autant plus importants que l'épaisseur du gâteau de boue augmente, apparaissent lorsque le courant d'analyse regagne le forage en suivant le trajet de résistance relativement faible formé par le gâteau du boue, de sorte que la mesure de la formation est fortement influencée par la résistivité du gâteau de boue. Plusieurs appareils ont été proposés pour résoudre ce problème. Le système à patin focalisé décrit dans le brevet américain 2.712.629 (Doll, délivré le 5 juillet 1955) est particulièrement approprié à une utilisation où des gâteaux de boue d'épaisseurs minimales à modérées sont présents dans des boues sailines. Le système à patin focalisé du brevet No. 3.132.298 (Doll et Al, délivré le 5 mai 1964) est un appareil qui se comporte de façon satisfaisante dans des gâteaux de boue relativement épais. Plus récemment, des outils à électrodes montés sur patin ont été mis au point et permettent d'obtenir $R_{xo}$ avec une meilleur précision, en particulier dans des boues épaisses. Ce nouveau type d'outil de diagraphie de puits a été mentionné sous le nom d'appareil à focalisation sphérique et est décrit dans le brevet américain No. 3.760.260 (Schuster, délivré le 18 septembre 1973). Le système à focalisation sphérique a également été proposé pour déterminer l'épaisseur latérale du gâteau de boue et $R_{xo}$. Voir par exemple le brevet américain no. 3.973.188 (Attali et Al., délivré le 3 août 1976). Tous les outils de mesure de microrésistivité à focalisation mentionnés ci-dessus fournissent des mesures satisfaisantes de $R_{xo}$ dans certaines conditions, bien qu'aucun d'entre eux ne fournisse des valeurs de $R_{xo}$ précises dans toutes les conditions.

Les dispositifs à patin pour le contact avec la paroi ont également été utilisés pour déterminer le pendage. Les dispositifs de détermination du pendage, connus dans la technique sous le nom de pendagemètres, utilisent essentiellement quatre patins qui sont appliqués sur la paroi du forage suivant deux diamètres perpendiculaires. Généralement, chaque patin contient un capteur qui effectue l'investigation des caractéristiques des formations entourant immédiatement le patin. Voir par exemple le brevet américain No. 3.060.373 (Doll, 23 octobre 1962). Un patin individuel peut être équipé du plusieurs électrodes afin d'améliorer la démarcation entre les frontières séparant les lits (voir par exemple Doll, brevet 3.060.373); d'augmenter le rapport signal à bruit du pendage (voir par exemple le brevet américain No. 3.521.154 (Maricelli, 21 juillet 1970); d'éliminer les variations de vitesse provoquées par l'effet dit de "yoyo" (voir même référence); ou de permettre une corrélation plus détaillée d'éléments des signaux correspondant à des variations verticales des caractéristiques de la formation (voir par exemple le brevet américain No. 4.251.773) Cailliau et Al., 17 février 1981).

Les pendagemètres utilisent généralement des systèmes à électrodes focalisées de façon passive pour contraindre le courant d'analyse à pénétrer latéralement jusqu'à une distance appréciable dans la formation géologique adjacente. En général, l'électrode de courant de focalisation est une surface métallique qui forme le majeure partie de la surfacé du patin. Au centre de la surface du patin se trouve une cavité recouverte d'une couche de matériau isolant. Une électrode à courant d'analyse est disposée dans la cavité et est séparée du patin métallique proprement dit par la matériau isolant. Le courant d'analyse émis par l'électrode d'analyse est contraint à pénétrer latéralement dans la formation géologique adjacente par le courant émis par l'électrode de focalisation. Un courant de focalisation supplémentaire peut être émis par le surface conductrice du corps du sonde du pendagemètre. Lorsque plusieurs électrodes d'analyse sont prévues, les électrodes supplémentaires sont totalement entourées par l'électrode de focalisation de telle manière que les faisceaux de courant d'analyse respectifs soient focalisés de la façon décrite ci-dessus par le courant émis par l'électrode de focalisation. Le retour de courant peut s'effectuer par l'intermédiaire de l'électrode de retour B située à l'extrémité inférieure du câble multiconducteurs, comme décrit dans le brevet américain No. 3.060.373 de Doll, ou par l'intermédiaire d'un élément du corps de l'outil, comme c'est le cas dans le brevet e Cailliau et Al.

Dans les systèmes de mesure du pendage de l'arte antérieur, les faisceaux de courant d'analyse sont focalisés de façon à pénétrer relativement profondément dans le formation géologique faisant face à l'élément de patin, de telle manière qu'une partie appréciable de la résistance électrique s'opposant au faisceau dans la formation géologique, soit due à la partie non contaminée des formations, même si cette zone est éloignée du forage proprement dit par un gâteau de boue et une zone envahie. En outre, la focalisation et la profondeur de pénétration de tous les courants d'analyse sont en règle générale pratiquement identiques, pour faciliter la détermination du pendage et, dans le cas d'un outil à patin à électrodes multiples, pour faciliter l'annulation du bruit, la correction de vitesse et/ou une corrélation plus détaillée de certaines caractéristiques du signal.

En conséquence, l'un des buts de la présente invention est de fournir des signaux se prêtant à des déterminations de résistivité dans des conditions d'invasion plus variées que ne le permettait l'art antérieur. Un autre but de l'invention est de fournir des signaux se prêtant à des déterminations de résistivité de plus grande précision que ne le permettait l'art antérieur. L'invention a également pour but de fournir des signaux se prêtant à une détermination de l'épaisseur et/ou de la résistivité d'une ou de plusieurs zones entourant le forage.

Ces buts sont atteints grâce à plusieurs réalisations conformes à l'invention et telles que définies dans les revendications indépendantes 1, 6, 12 et 15.

D'autres buts, aspects et particularités de l'invention apparaîtront à la lecture de la description détaillée et des revendications ci-après, faites en référence aux dessins annexés qui font tous partie de la présente description.

Dans les dessins, dans lesquels les mêmes numéros de référence désignent des parties identiques:

la figure 1 (art antérieur) est un graphique représentant la répartition radiale de résistivités dans un lit aquifère où $R_{mf}$ est significativement plus élevé que $R_w$;

la figure 2 est une vue de côté d'un mode de réalisation d'un outil de diagraphie de forages selon l'invention, dans laquelle la formation géologique traversée par le forage est illustrée en coupe et les équipements de surface sont illustrés de façon schématique;

la figure 3 est une vue de face de la surface d'un mode de réalisation du patin pour le contact avec la paroi, selon la figure 2;

la figure 4 est une vue transversale longitudinale du patin de la figure 3, dans laquelle les circuits électroniques associés au patin sont représentés de façon schématique;

la figure 5 est un graphique destiné à expliquer l'utilisation des signaux produits conformément à la présente invention;

la figure 6 est un organigramme destiné à expliquer la création et l'utilisation du graphique de la figure 5;

la figure 7 est un organigramme expliquant l'utilisation des signaux produits par un mode de réalisation de la présente invention comportant plus de trois électrodes de courant;

la figure 8 est un graphique servant à expliquer certains stades de l'organigramme de la figure 7;

la figure 9 est une représentation plane d'un autre mode de réalisation d'un outil de diagraphie des forages selon l'invention, dans laquelle le formation géologique traversée par le forage est illustrée en coupe transversale et les équipements de surface sont illustrés de façon schématique;

la figure 10 est un vue de face d'un mode de réalisation du patin pour le contract avec la surface représenté figure 9;

la figure 11 est un coupe transversale longitudinale du patin de la figure 10, dans laquelle les circuits électroniques associés au patin sont représentés de façon schématique;

la figure 12 est une vue en coupe transversale latérale du patin de la figure 10;

la figure 13 est un graphique destiné à explquer la densité de courant à la surface du patin de la figure 10;

la figure 14 est un vue plane d'un mécanisme de bras selon la présente invention, destiné à excentrer la sonde de mesure de résistivité et à maintenir le patin en contact avec la paroi du forage, dans laquelle la formation géologique traversée par le forage est représentée en coupe transversale et le mécanisme est représenté en position patin écarté;

la figure 15 est une vue plane du mécanisme de bras de la figure 14 représenté en position patin rentré; et

la figure 16 est une vue en coupe transversale latérale du mécanisme de la figure 15 selon le plan F16—F16.

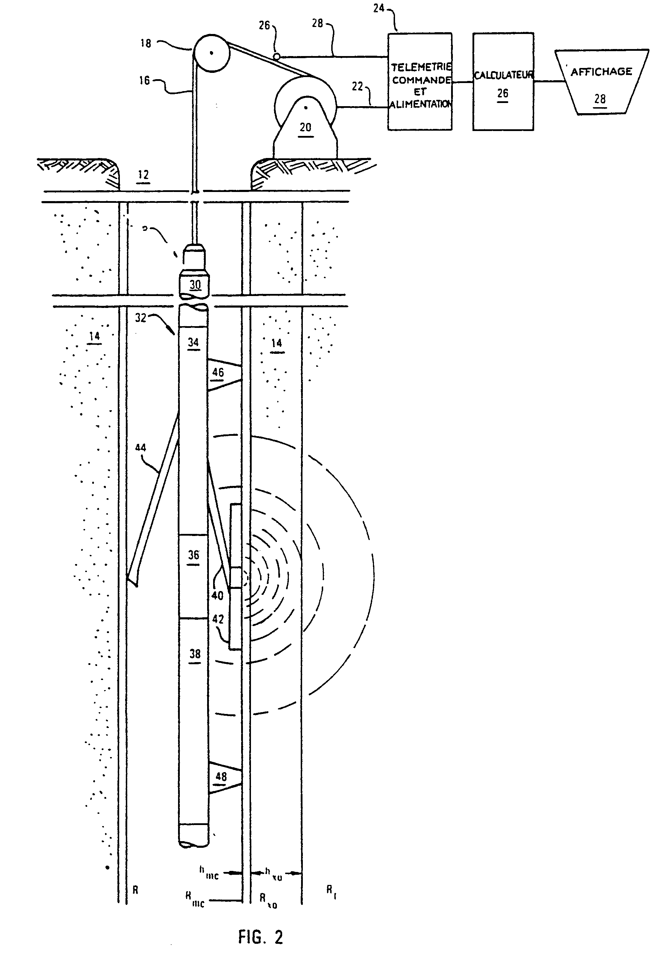

La figure 2 montre un mode de réalisation d'un outil 10 de diagraphie de forage. L'outil est disposé dans un forage 12 traversant une formation géologique 14. Le forage 12 est rempli d'une boue de forage appropriée. L'extrémité de l'outil 10 la plus proche de la surface est reliée par l'intermédiaire d'un câble blindé multiconducteurs 16 à un appareil approprié à la surface du sol, pour soulever et abaisser l'outil 10 dans le forage 12. Le câble multiconducteurs 16 passe sur une poulie 18 pour s'enrouler sur un mécanisme de treuil 20. Le raccord électrique entre les divers conducteurs du câble du multiconducteurs 16 et les circuits de télémétrie, de commande et d'alimentation 24 situés à la surface du sol, s'effectue au moyen d'un câble 22 et d'un dispositif de contact à bague collectrice et à balais à plusieurs éléments appropriés faisant partie intégrante du mécanisme de treuil 20. Les informations concernant la profondeur du câble sont fournies par la roue de mesure 26 et transférées par l'intermédiaire du câble 28 aux circuits de télémétrie, de commande et d'alimentation 24. Les signaux provenant de l'outil 10 contenant les informations sur l'une des caractéristiques de la formation 14 sont fournis au calculateur 26 par les circuits de télémétre, de commande et d'alimentation 24. Un diagramme de la caractéristique de la formation en fonction de la profondeur est produit par le calculateur 26 et fourni à un dispositif d'affichage 28 en vue d'être visualisé pour un utilisateur.

L'outil 10 comprend un certain nombre de parties individuelles, parmi lesquelles plusieurs cartouches, désignées dans leur ensemble en 30, pour alimenter en énergie l'outil 10 et commander son fonctionnement, pour prétraiter les signaux de mesure, et pour fournir une interface de télémétrie entre l'électronique descendant dans le forage et le câble 16; et une sonde indiquée globalement en 32 destinée à fournir des signaux de mesure selon la présente invention. La sonde 32 comporte 3 parties allongées longitudinalement adjacentes 34, 36 et 38. Les parties 34 et 38 sont constituées d'un métal électriquement conducteur tel que l'acier inoxydable. La partie 36, qui est placée entre les parties de sonde conductrices 34 et 38 joue le rôle d'isolant. Un agencement adéquat, qui est décrit dans le brevet de Doll No. 3.060.373 mentionné ci-dessus, comprend un manchon en résine époxy ou viton disposé autour de parties faisant saillie sur les sections 34 et 38 qui sont reliées de façon non conductrice les unes aux autres. La partie 34 porte en outre un bras 40 auquel est fixé un patin ou sobot 42 pour le contact avec la paroi, ainsi qu'un contra-bras 44. Le contre-bras 44 et le bras 40 coopèrent de préférence, bien que non nécessairement, pour excentrer la sonde 32 dans le forage 12. La sonde 32 et le patin 42 sont maintenus sensiblement dans un plan de symétrie passant par le centre de chacun d'entre eux, par le bras 40. Deux éléments de frottement 46 et 48, respectivement solidaires des parties 34 et 38 et tous deux alignés angulairement avec le patin 42 par rapport à l'axe central de la sonde 32, sont prévus pour empêcher la sonde 32 d'entrer en contact avec la paroi du forage 12. Les éléments 46 et 48 sont de préférence constitués d'un matériau à faible frottement, tel que le bronze, pour réduire le frottement lors des déplacements verticaux de l'outil 10 dans le forage 12, pendant une opération de diagraphie.

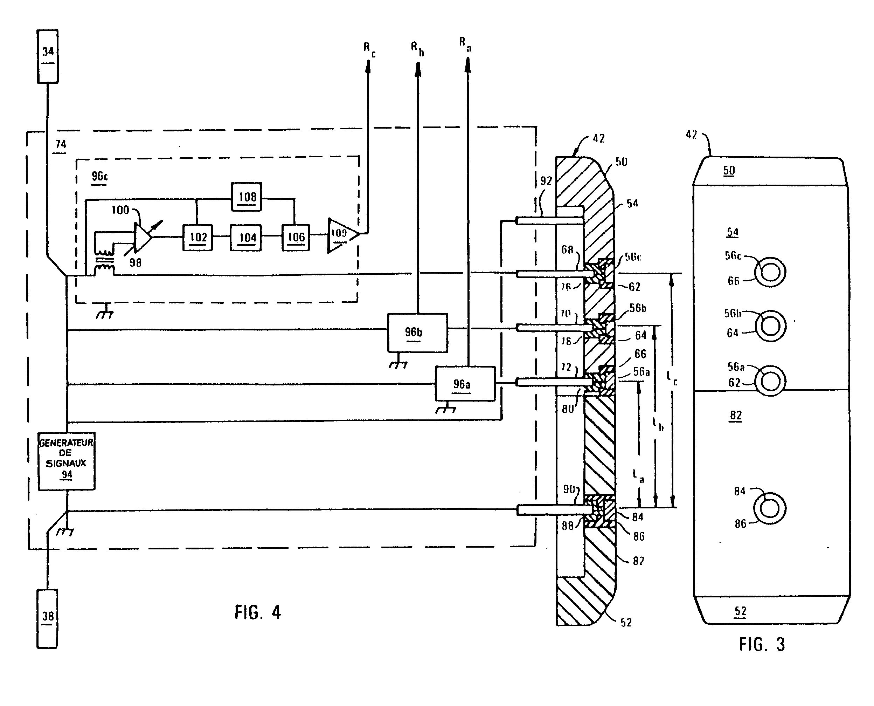

Un mode de réalisation pratique du patin 42 est représenté en détail dans la figure 3, qui montre une vue frontale du patin 42, et dans la figure 4, qui illustre une coupe transversale du patin 42 et les circuits électroniques qui y sont associés (représentés de façon schématique). Le patin 42 est allongé dans la direction du déplacement et sa surface est incurvée de façon à pouvoir s'adapter à la courbure de la paroi du forage 12. La partie supérieure 50 de la surface, qui est de forme conique, permet au patin 42 de se déplacer en contact avec la paroi du forage 12 au fur et à mesure que l'outil 10 parcourt le forage 12 vers la surface lors d'une opération de diagraphie. Une partie supérieure 54 de la surface ainsi que le bord antérieure 50 du patin 42 jouent le rôle d'une électrode de focalisation de grande dimension. Les parties 50 et 54 de la surface du patin sont constituées d'un matériau bon conducteur tel que le bronze ou l'acier doux, et sont reliées aux circuits électroniques 74 du patin par le câble 92. Dans la partie 54 de la surface sont disposées longitudinalement trois électrodes de courant 56a, 56b et 56c qui sont chacune montées de façon à affleurer à la surface de la partie 54 et qui sont portées et électriquement isolées de la partie 54 de la surface, par des supports isolants respectifs 62, 64 et 66. Les électrodes de courant 56a, 56b, et 56c, qui peuvent être constituées d'acier inoxydable, sont noyées dans un matériau électriquement isolant comme par exemple de l'Araldite ®, comme indiqué en 76, 78 et 80. Les électrodes de courant 56a, 56b et 56c sont reliées aux circuits électroniques 74 du patin par des câbles électriques respectifs 68, 70, 72. Une partie inférieure 82 de la surface du patin 42 est constituée d'un matériau isolant tel que du caoutchouc dur ou une résine époxy. Au centre de la partie 82 de la surface, est disposée une électrode de retour 84 maintenue par un support isolant 86 consitué d'un matériau céramique, et noyée dans un matériau isolant 88 tel que de l'Araldite®. L'électrode de retour 84 est reliée à l'électronique 74 par le câble 90. Une partie inférieure 52 de la surface, de forme conique, constitue l'extrémité inférieure du patin 42 de l'outil 10 qui parcout le forage 12 lors de l'opération de diagraphie.

Les dimensions types d'une sonde 32 sont les suivantes: les parties 34, 36 et 38 de la sonde mesurent respectivement longitudinalement 100 cm, 20 cm et 100 cm. La sonde 32 a un diamètre de 10 cm et se trouve normalement à une distance de 5 cm de la paroi du forage 12 dans le plan défini par les axes centraux de la sonde 32 et du patin 42. Les dimensions types d'un patin 42 sont les suivantes; les électrodes de courant 56a—56c et 84 ont un diamètre de 0,5 cm. Les électrodes de courant 56a—56c sont à des distances longitudinales de l'électrode de retour 84 de $L_a = 6,5$ cm, $L_b = 9,5$ cm et $L_c = 12,5$ cm. Les dimensions longitudinales des parties de surface 54 et 50 sont de 13 cm et celles des parties de surface 82 et 52 sont de 13 cm. Pour un forage type de 20 cm, les parties de surface 54 et 82 ont un rayon caractéristique de 10,4 cm avec une extension latérale de ∓ 25°.

L'electronique appropriée au fonctionnement du patin 42 en association avec la sonde 32 est représentée globalement en 74 dans la figure 4. Le générateur de signaux 94 fournit le courant électrique au patin 42 et plus précisément, à la partie de surface 54 et aux électrodes de courant individuelles 56a, 56b et 56c, par l'intermédiaire des circuits de signaux de mesure respectifs 96a, 96b et 96c. Le courant revient au générateur de signaux 94 par l'intermédiaire de l'électrode de retour 84. La fréquence du courant délivré est de 1,010 Hz.

Le circuit pour signaux de mesure 96c est représenté en détail dans la figure 4, les circuits pour signaux de mesure 96b et 96c étant sensiblement identiques dans leur conception et représentés de manière générale par celui-ci. Le courant d'analyse provenant du générateur de signaux 94 est fourni à l'électrode de courant 56c par l'intermédiaire du transformateur d'entrée 98. Le transformateur 98 fournit le signal à un préamplificateur d'isolation à gain variable 100, dont le gain et les paramètres de démultiplication sont commandés depuis la surface. La sortie du préamplificateur d'isolation à gain variable 100 est délivrée à un détecteur de phase 102, qui reçoit également le signal généré par le générateur de signaux 94. Le détecteur de phase 102 mesure seulement la partie du signal de mesure qui est en phase avecv le courant fourni par le générateur de signaux 94. La sortie du détecteur de phase 102 est envoyée au filtre passe-bas 104, qui intègre le signal et produit un signal dont l'amplitude est caractéristique de l'amplitude du signal de mesure détecté. Ce signal de mesure intégré est envoyé au circuit détecteur de rapport 106, qui reçoit également le signal provenant du générateur de signaux 94 ayant été intégré par l'intégrateur 108. La sortie du circuit détecteur de rapport 106, qui est représentative de la résistivité apparente telle qu'elle est mesurée par les électrodes de courant 56c, est amplifiée dans l'amplificateur 109 et envoyée vers la surface en tant que signal $R_c$. Le transformateur d'entrée 98 et le préamplificateur 100 sont typiquement montés au dos du patin associé. Le reste de l'électronique du circuit de mesure 96c peut être contenu dans la cartouche électronique de l'outil 10, dans la sonde 32 ou être monté au dos du patin 42.

Le courant provenant du générateur de signaux 94 est également appliqué à la partie 34 de la sonde pour améliorer la focalisation, comme cela est décrit ci-après. Le retour du courant vers le générateur de signaux 94 est représenté par une connexion à la partie 38 de la sonde, mais cette

·connexion peut être omise sans dégradation notable de la mesure.

Le principe de fonctionnement de la sonde 32 est illustré schématiquement dans le partie droite de la figure 2. Le courant émis par les électrodes de courant 56a—56c et par la partie 54 de la surfce du patin venant au contact de la paroi et par le partie 50 de la surface cônique, pénètre dans la boue, dans le gâteau de boue et/ou dans la formation pour revenir au générateur de signaux 94 par l'intermédiaire de l'électrode de retour 84 et de la partie de sonde 38. Une répartition de densité de courant est établie sur la partie de surface 54 et, par conséquent, des lignes de courant provenant de diverses zones de la partie de surface 54 sont établies et dépendent de l'épaisseur et de la résistance du gâteau de boue, et de la zone envahie, ainsi que de la résistance de la formation proprement dite. Les électrodes de courant 56a, 56b et 56c sont avantageusement disposées dans des zones de la partie de surface 54 présentant des densités de courant s'affaiblissant progressivement et associées à des profondeurs d'investigation croissant progressivement. Alors que les électrodes de courant 56a, 56b et 56c sont disposées à des intervalles réguliers le long de l'axe central longitudinale de la partie de surface 54, il n'est pas nécessaire de remplir toutes ces conditions, comme décrit ci-dessous. Les courants émis par les électrodes de courant 56a—56c sont mesurés et renvoyés vers la surface en tant que résistances respectives $R_a$, $R_b$ et $R_c$. Les courants provenant des électrodes de courant 56a—56c sont focalisés par le courant émis par les parties de surface 50 et 54 et également par la partie de sonde 34 qui contrainte essentiellement les courants d'analyse a rester dans un plan passant par les axes centraux de la sonde 32 et du patin 42. Cet arrangement particulier minimise avantageusement l'élargissement du faisceau et améloire la focalisation des courants d'analyse. La focalisaion est encore meilleure lorsqu'on maintient le corps de sonde 32 à une faible distance, sensiblement constrante, du patin 42 par excentrage de la sonde 32, comme cela est représenté.

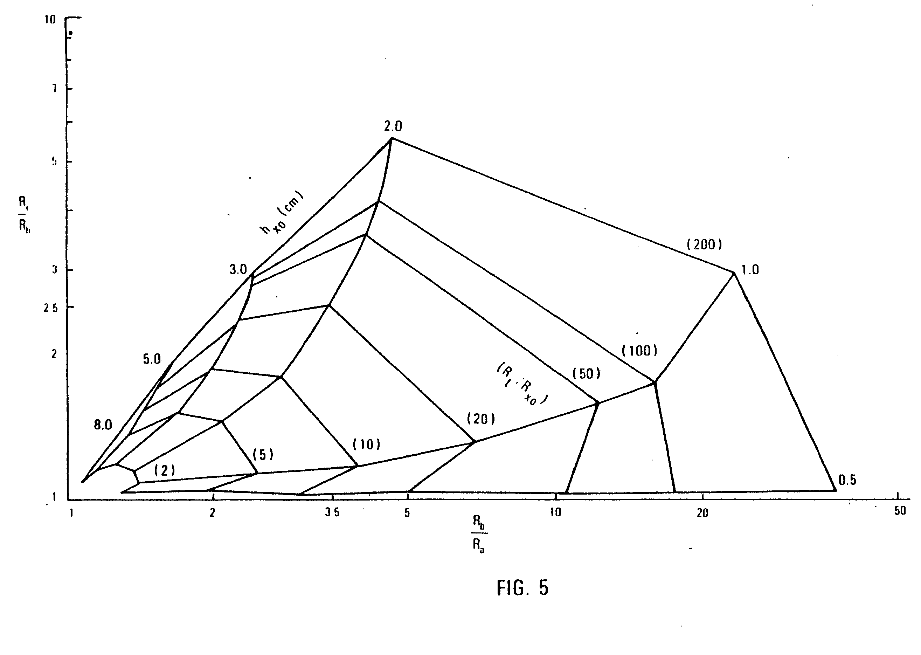

Une solution graphique donnant le valeur de $R_{XO}$ est illustrée dans la figure 5, qui représente un graphique en "spirale" ayant pour abscisse le rapport $R_b/R_a$ et pour ordonnées le rapport $R_c/R_b$. L'intersection des valeurs respectives de ces deux rapports fournit la valeur de $h_{XO}$ et te $R_t/R_{XO}$. Les valeurs et $R_t/R_{XO}$ sont représentées entre parenthèses dans la figure 5 et varient de gauche à droite entre 2 et 200. Les valeurs de $h_{XO}$ varient de droite à gauche entre 0,5 et 8,0. A titre d'exemple, lorsque la sonde 32 indique un rapport $R_b/R_a$ de 3,5 et un rapport $R_c/R_b$ de 2,5, l'abaque de la figure 5 fournit une épaisseur de gâteau de boue de 2,0 cm et un rapport $R_t/R_{XO}$ de 20. Si la résistivité profonde apparente est connue, par exemple par une mesure effectuée à l'aide de l'appareil électrique à focalisation profonde décrit dans le brevet US No. 3 772 589 (Scholberg, 13 novembre 1973) ou par un autre outil électrique ou à induction appropriée, la valeur approximative de $R_{XO}$ est obtenue facilement. On peut par la suite déterminer par itération les valeurs précises de $R_{XO}$ et $R_t$.

Un processus analogue à celui décrit ci-dessus pour élaborer et utiliser l'abaque de la figure 5, peut être réalisé sous forme d'un processus de consultation automatique d'un tableau incorporé au calculateur 26 de la figure 2. Le calculateur 26 peut par exemple être constitué par n'importe quel calculateur numérique non spécialisé approprié. Un organigramme simplifié permettant de programmer le calculateur 26 de façon à créer, stocker et utiliser un tableau de consultation approprié est illustré dans la figure 6.

L'étape initiale 110 consiste de façon appropriée à définir le problème, c'est-à-dire à définir la sonde et la formation. La sonde 32 est conçue en tant que dispositif à basse fréquence. Sa représentation mathématique est un problème de valeur aux limites relevant de la théorie des potentiels, et un type de problème mathématique classique. La sonde 32 est conçue sous forme d'un mandrin supposé centré sur l'axe de rotation d'un système de coordonnées cylindriques. Axialement, le milieu de la sonde est isolant (partie 36) alors que les extrémités adjacentes (parties 34 et 38) sont conductrices. La sonde 32 est entourée de fluide de forage, c'est-à-dire de boue de forage qui elle-même est entourée de couches concentriques de gâteau de boue, d'une zone envahie et d'une formation non perturbée. Le corps de la sonde 32 a un rayon de 5 cm, les parties de sonde 34 et 38 ont chacune une longueur de 100 cm et la partie de sonde 36 a une longueur de 20 cm. Le patin 42 est conçu de façon à présenter une partie médiane isolante et des extrémités conductrices. Le patin 42 est appliqué contre la paroi du forage 12. La sonde 32 et la patin 42 sont disposés symétriquement par rapport à un plan horizontal perpendiculaire à la sonde 32 et passant par le milieu de la sonde 32 et du patin 42. On choisit une longueur de patin 42 de 2 cm. Les surfaces conductrices du patin 42 comportent des électrodes de 0,5 cm de largeur et espacées de 3 cm, les électrodes auxquelles on s'intéresse étant les trois électrodes de chaque surface conductrice les plus proches de la partie isolante. Les parties supérieure 34 et inférieure 38 de la sonde sonte électriquement reliées aux parties supérieure et inférieure du patin 42. Cela définit un arrangement satisfaisant illustrant une situation où, soit la partie inférieure du patin ou la partie inférieure de la sonde 38 jouent le rôle du retour de courant, soit le retour de courant allongé est concentré dans l'électrode unique de courant de retour.

Au stade 112, on choisit un ensemble de valeurs de $h_{mc}$, $h_{XO}$, $R_{mc}$, $R_{XO}$ et $R_t$ et on détermine au stade 114 les rapports synthétiques $R_b/R_a$ et $R_c/R_b$ en utilisant la méthode des éléments finis, qui est un technique numérique bien connue, pour résoudre le problème de la valeur aux limites. Les valeurs de $H_{XO}$ et de $T_t/R_{XO}$ sont stockées en mémoire au stade 116 en fonction des rapports

synthétiques $R_b/R_a$ et $R_c/R_b$. Au stade 118, on effectue un vérification pour déterminer si un nombre suffisant de valeurs de h et de R ont été déterminées pour permettre la création d'un abaque ayant la résolution souhaitée. Si cela n'est pas le cas, on choisit au stade 112 un ensemble discret de valeurs de $H_{mc}$, $H_{XO}$, $R_c$ et $R_t$ et on exécute de nouveau les opérations 114, 116 et 118. Si un nombre suffisant de valeurs a été sélectionné, on considère que le tableau de consultation est complet. On effectue alors au stade 120 et 122 une mesure de $R_t$ (résistivité de la formation non envahie mesurée par un outil d'investigation en profondeur) et les mesures de $R_a$, $R_b$ et $R_c$. Le calculateur 26 établit au stade 124 les rapports $R_b/R_a$ et $R_c/R_b$ et consulte le tableau de consultation pour trouver les valeurs correspondantes de $h_{XO}$ et $R_t/R_{XO}$, au stade 126. Si ces valeurs ne peuvent être obtenues de façon exacte, le calculateur 26 effectue uen interpolation pour déterminer les valeurs de $H_{XO}$ et de $R_t/R_{XO}$. Une fois qu'une valeur de $R_t/R_{XO}$ est obtenue celle de $R_{XO}$ est déterminée sans difficulté au stade 128.

L'invention concerne également l'utilisation de plus de trois électrodes se courant pour fournir soit une mesure plus précise de $R_{XO}$, soit un profil de résistivité de l'invasion. Un appareil utilisable à cette fin serait tout à fait analogue à celui représenté dans les figures 2 et 3, à l'exeption du fait que les électrodes de courant supplémentaires seraient installées sur le patin 42.

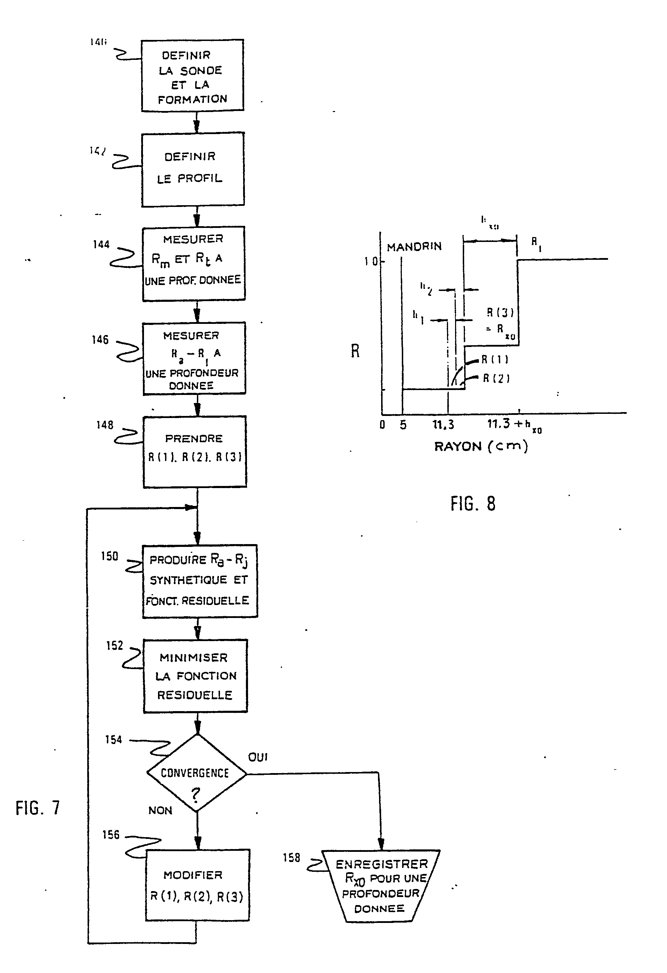

Un autre mode de traitement des signaux de mesure provenant des électrodes de courant est représenté dans la figure 7, où le calculateur 26 pourrait être programmé de la manière suivante. Une sonde et une configuration de formation sont définies à l'étape 140. La configuration est telle que définie dans la figure 2 et le texte qui y est associé, à l'exception du fait que l'on suppose qu'il y a 10 électrodes. Les électrodes ont toutes une largeur de 0,5 cm et sont espacées de 0,16 cm. La longueur hors tout de la partie émettrice du patin est de 19,48 cm. La séparation entre l'électrode de retour et l'électrode émettrice la plus proche est de 10,16 cm. Le mandrin, de 10,16 cm de diamètre a une longueur de 162 cm et comporte une partie isolée de 56 cm de long.

A titre d'illustration, on décrit un problème simplifié avec contraste moyen. Le profil de résistivité, qui est défini au state 142 est supposé être échelonné, de la façon représentée dans la figure 8. La résistivité $R_m$ du forage et la résistivité exacte de la formation $R_t$ sont mesurées avec d'autres dispositifs. Trois anneaux concentriques d'épaisseurs supposées $h_1$ et $h_2$ et $R_{XO}$ mais de résistivités inconnues R(1), R(2) et R(3) qui sont les variables indépendantes, sont définis. Les deux premiers anneaux représentent soit un gâteau de boue de 2 épaisseurs, soit, en variante, un écart par rapport à la paroi et le gâteau de boue. La troisième couche représente un zone envahie, dont l'épaisseur est la profondeur d'investigation connue pour un outil particulier. Ce problème est représentatif d'une situation pratique où l'on doit trouver la $R_{XO}$ correspondant à un

outil particulier, lorsque l'écart ou le gâteau de boue varient. On peut si on la souhaite définir un modèle plus complexe représentant un profil de résistivité détaillé de la zone envahie.

$R_t$ et $R_m$ sont mesurés au stade 144 par des instruments connus tels qu'un appareil électrique d'investigation en profondeur décrit dans le brevet de Scholberg mentionné ci-dissus et un dispositif de mesure de la résistivité de la boue, pour établir la valeur de certains paramètres mentionnés ci-dessus.

L'outil 10 effectue au stade 146 une mesure de 10 résistivités apparentes $R_a$—$R_j$ à une profondeur donnée. Des valeurs initiales de R(1), R(2) et R(3) sont estimées au stade 148. Sur la base de ces valeurs supposées, les valeurs synthétiques de $R_a$—$R_j$ sont calculées en utilisant un code d'éléments finis à deux dimensions, dont plusieurs vesions appropriées sont disponibles dans le commerce. En outre, une fonction résiduelle est produite sur la base de ces estimations au stade 150. La fonction résiduelle est un vecteur calculé en prenant la différence, électrode par électrode, entre les courants mesurés $R_a$—$R_j$ et les courants synthétiques $R_a$—$R_j$.

La fonction résiduelle produite au stade 150 est minimisée au stade 152 par application de l'algorithme de Levenberg-Marquardt, qui est un procédé bien connu pour minimiser une fonction de plusieurs variables indépendantes. L'algorithme utilise les différences finies pour déterminer les variations des estimateurs en vue de l'itération suivante et de la minimisation suivante de la fonction résiduelle. Un test de convergence est effectué au stade 154. Si l'algorithme n'a pas convergé, les estimateurs de R(1), R(2) et R(3) sont modifiés selon le stade 152, et on revient au stade 150 pour produire de nouveaux $R_a$—$R_j$ synthétiques et une nouvelle fonction résiduelle. Les opérations 150, 152, 154 et 156 sont exécutées de façon itérative jusqu'à convergence, auquel cas on passe au stade 158 qui enregistre la valeur de $R_{XO}$, et si on le souhaite de R(1) et R(2) pour la profondeur donnée.

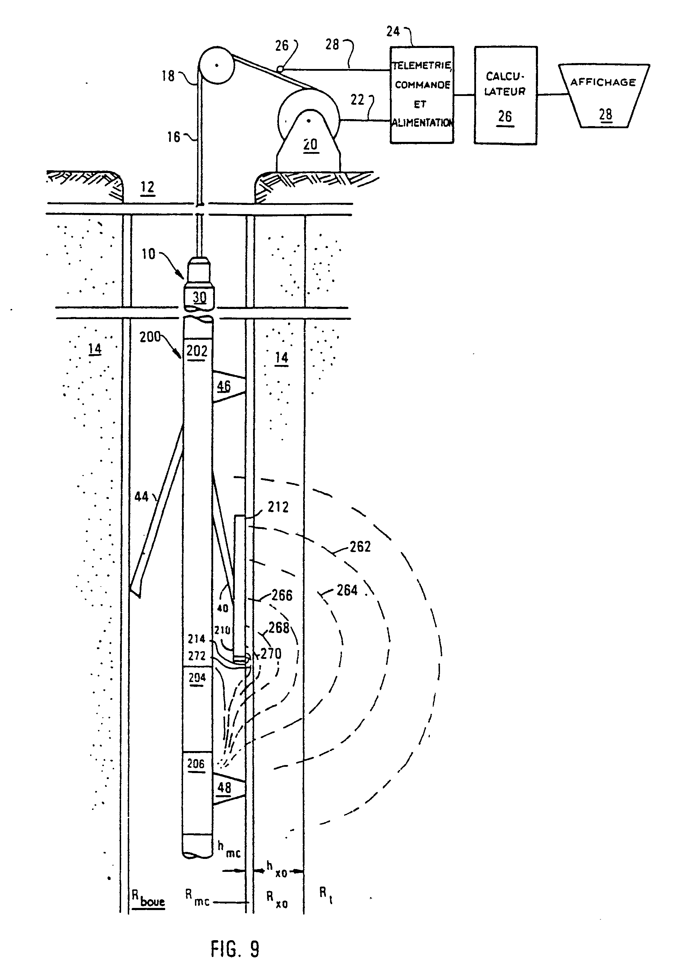

La figure 9 représente un autre mode de réalisation de l'invention qui augmente sensiblement le rapport entre la profondeur d'investigation et la longueur du patin. On obtient une profondeur d'investigation satisfaisante avec un patin court qui peut être applique facilement et de façon fiable sur la paroi d'un forage. Une sonde indiquée globalement en 200 fournit des signaux de mesure selon la présente invention. La sonde 200 comprend trois parties allongées longitudinalement adjacentes 202, 204 et 206. Les parties 202 et 206 sont constituées d'un matériau électriquement conducteur tel que de l'acier inoxydable. La partie 204, qui est placée entre les parties de sonde conductrices 202 et 206 jour le rôle d'isolant. Un arrangement approprié est examiné ci-dessus dans le contexte de la partie de sonde 36. La partie 202 porte un bras 40 auquel un patin 210 est fixé, ainsi qu'un contre-bras 44. Le contre-bras 44 et le bras 40 coopèrent de préférence de façon à excentrer la sonde 200 dans le forage 12. Le partin 210 comporte une partie de surface de focalisation 212 et une partie isolante 214, comme cela est expliqué en détail ci-dessous. Deux éléments de frottement 46 et 48 sont prévus, comme décrit précédemment.

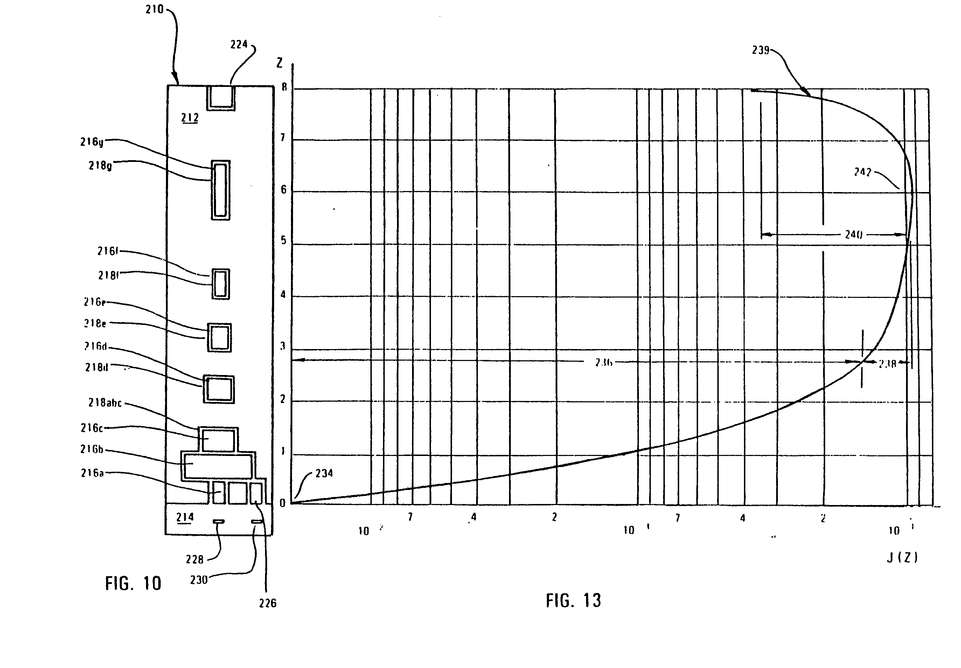

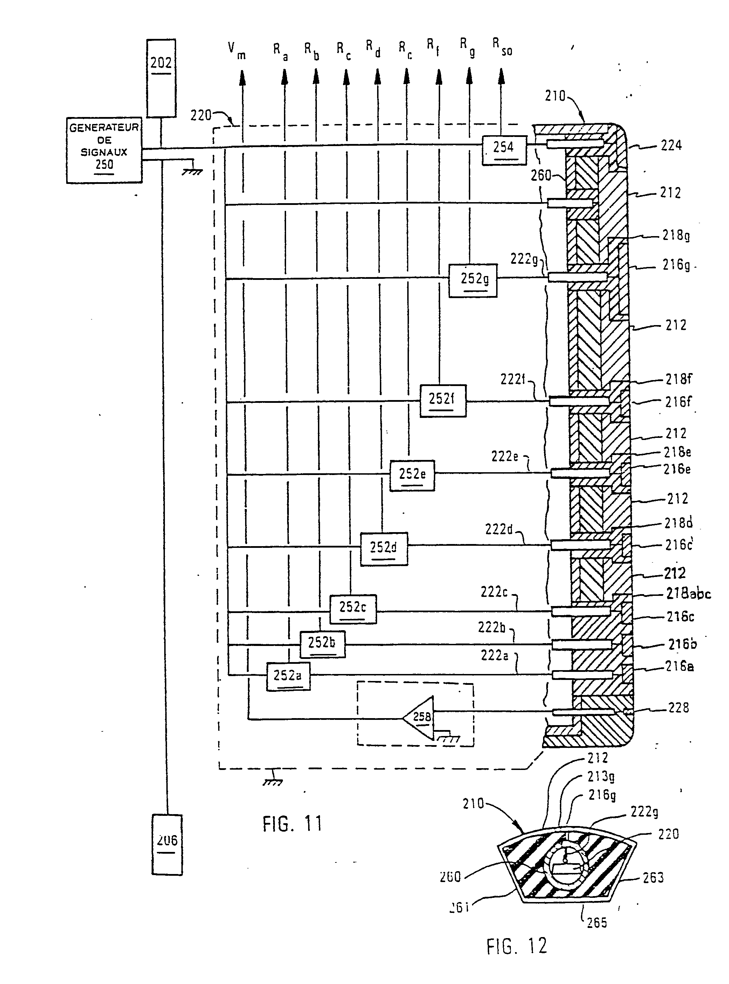

Un mode de réalisation particulièrement avantageux du patin est représenté en détail dans la figure 10, qui montre une vue frontale du patin 210, et dans les figures 11 et 12, qui montrent des coupes transversales du patin 210 et l'électonique associée (représentée schématiquement dans la figure 11 et indiquée globalement en 220). Le patin 210 peut comporter des parties côniques, comme décrit précédemment, et est allongé dans la direction du mouvement. La surface métallique 212 du patin 210 est incurvée de façon à s'adapter à la courbure de la paroi du forage 12. A l'intérieur de la partie de surface 212, sont placées longitudinalement sept électrodes de courant 216a—216g qui sont montées de façon à affleurer à la surface de la partie de surface 212 et qui sont portées et électriquement isolées de la partie de surface 212 par des éléments céramiques respectifs 218abc et 218d-g. Les électrodes de courant 216a—216g sont reliées à l'électronique du patin 220 par des câbles respectifs 222a—222g. La partie de surface 212 comporte deux électrodes de courant supplémentaires 224 et 226 et la partie de surface 214 contient deux électrodes de tension 228 et 230. Le but de ces électrodes est décrit ci-après.

Les dimensions types de la sonde 200 sont les suivantes. Les parties de sonde 202, 204 et 206 mesurent respectivement longitudinalement 76,20 cm, 38,1 cm et 38,1 cm. La sonde 200 a un diamètre de 10,16 cm et présente un écart nominal par rapport à la paroi du forage 12 de 1,8 cm dans le plan défini par les axes centraux de la sonde 200 et du patin 210. Les dimensions types du patin 210 sont les suivantes; les longueurs des parties de surface 212 et 214 sont respectivement de 20,3 cm et de 1,5 cm. Pour un sondage type de 2,0 cm, les parties de surface 212 et 214 ont des rayons caractéristiques de 11,4 cm avec une extension latérale de + 25°.

Le patin 210 est de préférence maintenu dans une position longitudinale sensiblement fixe par rapport aux parties 202, 204 et 206 de la sonde 200. Une focalisation optimale est obtenue si le bord de la partie isolante 214 du patin les plus proche de la partie de sonde 206, se trouve dans un plan coupant transversalement la partie de sonde 202 à environ 2 cm de la jonction entre les parties de sonde 202 et 204, bien qui cette distance ne soit pas déterminante. Une distance de 1 cm a été choisie pour le mode de réalisation de la figure 9.

L'arrangement décrit fournit des lignes de courant ayant une profondeur de pénétration allant de quelque millimètres à environ 20 cm. Cela est obtenu malgré la faible longueur du patin 210, qui est d'environ 20 cm. En outre, le patin 210 est très résistant à l'usure du fait que sa surface de contact avec la paroi est essentiellement constituée de métal.

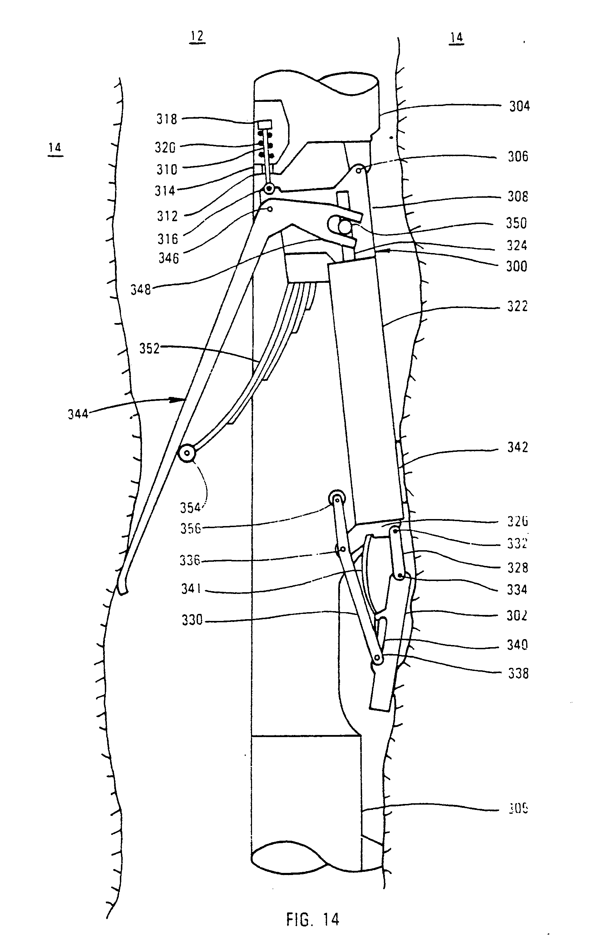

Les dimensions et l'agencement des électrodes de courant 216a—216g sont adaptés à la répartition de densité de courant sur la partie de surface 212, qui elle-même est liée à la profondeur d'investigation des courants d'analyse émis par les électrodes de courant 216a—216g. La courbe 239 représentée dans la figure 13 en association avec le patin 210 illustre la répartition de la densité de courant $J(z)$. Les abscisses représentent en échelle logarithmique la densité de courant $J(z)$ et les ordonnées représentent la position longitudinale $z$ sur la partie de surface 212. Le graphique de la figure 13, qui est donné à titre d'exemple, est basé sur $R_{xo}/R_{mc} = 100$ et $h_{mc} = 1,27$ cm.

La profondeur d'investigation du courant augmente lorsque la densité de courant diminue. La profondeur d'investigation est minimale à l'extrémité inférieure de la partie de surface 212, indiquée dans la figure 13 en 234. On peut remarquer qu'en partant du minimum 234, la profondeur d'investigation subit un rapide accroissement, indiqué globalement en 236, lorsque la partie de sonde 202 et que la partie de surface 212 commencent à focaliser de façon efficace le courant le long de l'axé longitudinal du patin 210. Un accroissement moins rapide est observé jusqu'à ce qu'un maximum 242 situé dans le tiers supérieure du patin soit atteint, comme cela est indiqué globalement en 238. Au delà du maximum 242, la proximité du bord supérieur 31 provoque une augmentation de la densité du courant et par conséquent, une diminution de la profondeur d'investigation, comme cela est indiqué globalement en 240.

Les sept électrodes de courant 216a—216g sont disposées de façon à fournir des mesures de résistivité à différentes profondeurs d'investigation. La première électrode 216a est adjacente à la partie isolante 21. La seconde électrode de courant 216b est séparée de la première électrode de courant 216a par une portion de l'élément isolant 218abc, et la troisième électrode de courant 216c est séparée de la seconde électrode de courant 216b par une autre portion de l'élément isolant 218 abc. La disposition dense des électrodes de courant 216a—216c est adaptée à la variation rapide de la profondeur d'investigation dans la partie 236 de la courbe 230. Les trois électrodes de courant 216d—216f sont séparées par des intervalles plus grands de façon à tenir compte de la variation relativement plus lente dans la partie 238 de la courbe 239. Dans la partie 240 de la courbe 239 comprenant le maximum 242, qui correspond pratiquement au tiers supérieur de la partie de surface 212, la variation à proximité du maximum 242 est faible et une seule électrode de courant, à savoir l'électrode 216g, suffit.

Comme le montre la figure 10, les électrodes de courant 216b—216g présentent des caractéristiques individuelles qui sont définies de façon à optimiser le rapport signal à bruit des mesures respectives. Plus précisément, les longueurs et largeurs des électrodes de courant respectives 216a—216g sont choisies de manière à maintenir une surface utilie optimale et maximiser le rapport signal à bruit des mesures respectives. Les caractéristiques respectives des électrodes 216a—216g sont fondées sur la variation longitudinale de la densité de courant le long de la partie de surface 212, comme l'illustre la courbe J(z), et la variation latérale de la densité de courant à travers la partie de surface 212. Le long de l'axe longitudinal de la partie de surface 212, où la densité de courant est élevée, celle-ci reste également stable sur une grande partie de la largeur du patin et n'augmente significativement qu'à proximité des bords latéraux. Cependant, dans les positions où la densité de courant est faible, la surface adjacente à l'axe longitudinale de la partie de surface 212 sur laquelle la densité de courant reste sensiblement stable, est relativement étroite. La largeur de chacune des électrodes de courant 216a—216g est définie de façon à ce que la variation latérale de la densité de courant depuis le centre de l'électrode (c'est-à-dire, de la partie de surface 21) jusqu'aux extrémités latérales de l'électrode, soit maintenue dans une plage donné, par exemple égale à 15%. Comme la densité de courant diminue lorsque la distance augmente par rapport à la partie isolante 214, les électrodes de courant 216b—216g ont des largeurs respectives qui décroissent lorsque la distance augment à partir de la partie isolante 214. L'électrode de courant 216a ne respecte pas cette règle de conception pour des raisons décrites plus loin. Par conséquent, l'électrode de courant 216b adjacente à l'électrode de courant 216a présente la largeur la plus importante, égale à plus de la moitié de la largeur de la partie de surface 212. L'électrode de courant 216c, adjacente à l'électrode de courant 216b, présente une largeur beaucoup plus faible, d'environ la moitié de celle de l'électrode de courant 216b. L'électrode de courant 216d est plus étroite que l'électrode de courant 216c et ainsi de suite, jusqu'à l'électrode 216g, qui est la plus étroite. Les longueurs des électrodes de courant 216—216g sont avantageusement sélectionnées de façon à être aussi grandes que possible, mais sont limitées par le fait qu'il est nécessaire que la variation de la densité de courant pour chaque électrode entre l'une de ces extrémités longitudinales et l'autre, soit inférieure à une valeur donné, par exemple, inférieure à 15%. Compte tenu de ce qui a été mentionné ci-dessus, le mode d'évolution de la longeur des électrodes de courant 216b—216g est de préférence l'opposé du mode défini pour la largeur. L'électrode de courant 216b est la plus courte, et la longeur de l'électrode augmente jusqu'à l'électrode de courant 216g qui est la plus longue.

L'électrode de courant 224 adjacente au bord supérieur de la partie de surface 212 est située dans une zone de densité de courant relativement importante et fournit une mesure correspondant à une profondeur d'investigation inférieur au maximum 242. La mesure effectuée avec l'électrode de courant 224 est sensible au contact du patin avec la paroi du forage 12 dans la zone du bord supérieur du patin 210. Lorsque le patin 210 est écarté de la paroi du forage 12, le courant doit traverser la boue de forage, provoquant une variation significative de la résistivité apparente mesurée par l'électrode de courant 224. La mesure fournie par l'électrode de courant 224 permet ainsi de contrôler le contact du patin 210 avec la paroi du forage 12.

L'électrode de courant 216a ne satisfait pas la règle de conception décrite pour les électrodes de courant 216b—216g. Alors que l'électrode de courant 216a peut avantageusement présenter une largeur pratiquement égale à celle de la partie de surface 212, conformément à la règle de conception utilisée, la zone de la partie de surface peut avantageusement être utilisée pour déceler un mauvais contact du patin et fournir une mesure lorsque le forage se trouve dans des conditions défavorables. En conséquence, l'électrode de courant 226 est pourvue latéralement d'un électrode de courant 216a dont la largeur est faible de façon à recevoir l'électrode de courant 226. L'électrode de courant latérale 226 fournit une mesure indiquant la résistivité à une très faible profondeur, de l'ordre de quelques millimètres, qui est pratiquement identique à la mesure fournie par l'électrode de courant 216a. On notera que la densité de courant dans la région de la partie de surface 212 dans laquelle les électrodes de courant 216a et 226 sont disposées, reste stable sur la quasi-totalité de la largeur du patin. En conséquence, les électrodes de courant 216a et 226 doivent fournir, lorsque le forage se trouve dans des conditions satisfaisantes, des mesures tout à fait semblables, bien que les mesures respectives à très faible profondeur, soient extrêmement sensibles au contact de la partie de surface 212 avec la paroi de forage 12. Si l'une des électrodes de courant 216a ou 226 n'est pas en contact avec la paroi du forage 12, la mesure fournie par l'électrode qui se trouve écartée de la paroi sera dominée par la résistivité $R_m$ de la boue, qui est normalement beaucoup plus faible que celle du gâteau de boue et de la zone envahie. Cependant, dans certaines circonstances, l'une des électrodes de courant 216a et 226 reste en contact avec la paroi du forage 12, comme par exemple lorsque la courbure de la partie de surface 212 ne correspond pas à celle de la paroi du forage 12. A titre d'exemple, si la courbure de la paroi du forage 12 est plus grande que celle de la partie de surface 212, la zone centrale de la partie de surface 212 n'entrera pas en contact avec la paroi. Dans ces circonstances, l'électrode de courant latérale 226 sera au contact de la paroi du forage 12 et une mesure satisfaisante sera obtenu malgré la mauvaise qualité de la mesure effectuée par l'électrode de courant centrale 216a. En outre, une différence significative entre les mesures respectives des électrodes de courant 216a et 226 indiquera un contact imparfait. La comparaison entre ces deux mesures permettra de vérifier l'application circonférentielle du patin 210 sur la paroi du forage 12.

La faible largeur des électrodes de courant 216a et 226 ne dégrade pas le rapport signal bruit des signaux de mesure obtenus à partir de celles-ci, car la densité de courant est très importante dans la zone inférieure de la partie de surface 212. Des électrodes latérales supplémentaires pourraient être prévues dans l'autres zones de la partie de surface 212 où la densité de courant est élevée. A titre d'exemple, on pourrait placer une seconde électrode de courant latérale au niveau de l'électrode de courant 216b et une troisième électrode de courant latérale au niveau de l'électrode de courant 216c.

Afin de diminuer l'influence de la résistivité de la boue sur les mesures fournies par les électrodes de courant 216a et 226, des électrodes de mesure de tension 228 et 230 sont disposées dans la partie de surface isolante 214 et respectivement associées aux électrodes de courant 216a et 226. Les électrodes 228 et 230 sont respetivement alignées dans la direction longitudinale du patin 210, avec les électrodes de courant 216a et 226 et se trouvent dans le centre latérale de la partie de surface isolant 214.

Les éle'ctrodes de tension 228 et 230 fournissent des mesures de tension respectives qui permettent d'effectuer une correction pour tenir compte de l'influence de la boue. Soit $I_a$ le courant émis par l'électrode de courant 216a et V la tension appliqué à la partie de surface 212 et si l'on considère les électrodes de courant 216a—216g, 2243 et 226, la mesure de résistivité apparente fournie par l'électrode 216a est:

$$R_a = k_a (V/I_a); \qquad (1)$$

$k_a$ étant un coefficient constant. La correction tenant compte de la boue consiste à remplacer cette expression par la suivante:

$$R_a^* = k_a (V—V_m)/I_a \qquad (2)$$

où $V_m$ est la mesure de tension effectuée par l'électrode de tension 228. La correction est effectuée au moins pour des mesures à très faible profondeur par les électrodes de courant 216a et 226. On peut si on le souhaite, effectuer la correction pour les mesures obtenues à partie d'autres électrodes de courant.

L'électronique appropriée au fonctionnement du patin 210 en association avec la sonde 200, est représentée globalement en 220 sur la figure 11. Un générateur de signaux 250, ayant des caractéristiques identiques à celles du générateur de signaux 94, fournit un courant électrique à la partie de surface 212 et aux électrodes de courant individuelles 216a—216g, 224 et 226 (non représentées) par l'intermédiaire de circuits pour signaux de mesure respectifs 252a—252g 254 et 256 (non représentés). Chacun des circuits pour signaux de mesure 252a—252g, 254 et 256 est pratiquement identique au circuit pour signaux de mesure 96c représenté dans la figure 4, le transformateur d'entrée associé et le préamplificateur étant de préférence montés à l'intérieur d'un tube métallique résistant à la pression 260 contenu à l'intérieur du corps du patin 210 (figure 12). Le patin 210 présente de façon appropriée des bords latéraux en métal conducteur 261 et 263 et un dos métallique conducteur 265, qui minimisent l'influence de la variation de distance entre la sonde 200 et le patin 210. Le volume situé à l'intérieur du corps du patin 210 peut être rempli par du caoutchouc dur, une résine époxy ou de l'huile. Le courant revient au générateur de siganux 250 par l'intermédiaire de la partie de sonde 206. Un courant de focalisation supplémentaire est fourni à la partie de sonde 202 et son retour s'effectue également par l'intermédiaire de la partie de sonde 206. L'électrode de tension 228 est reliée au préamplificateur 258 qui fournit la valeur du paramètre $V_m$. L'électrode de tension 260 et l'électronique qui y est associée seraient identiques, mais ne sont pas représentés pour plus de clarté.

Le principe de fonctionnement de la sonde 200 est illustré schématiquement dans la partie droite de la figure 9. Bien que tout à fait semblable en principe à la sonde 32 (figure 2), la sonde 200 possède une profondeur d'investigation plus importante. Les trajets de courant 262 et 264 partant de la zone supérieure de la partie de surface 212, sont fortement focalisés et pénètrent profondément dans la formation en traversant en grande partie la zone envahie. La focalisation est modérée dans la zone centrale de la partie de surface 212, comme l'indiquent les trajets de courant 266, 268 et 270. Le courant provenant de la zone inférieure de la partie de surface 212 est très faiblement focalisé et possède une très faible pénétration, comme le montre le trajet de courant 272. L'ensemble des mesures de résistivité apparente fournies par les électrodes de courant 216a—216g et 226, corrigées par les mesures obtenues par les électrodes de tension 228 et 230, sont traitées dans le calculateur 26 de la façon décrite ci-dessus, en vue de déterminer $R_{xo}$ ou un profil de résistivité, selon le cas souhaité.

Mécanisme de bras

De préférence, les positions longitudinales de la sonde 32 et du patin 42, ainsi que de la sonde 200 et du patin 210 doivent être maintenues constantes les unes par rapport aux autres. Un mécanisme de bras particulièrement approprié aux divers modes de réalisation de sonde décrits ici est représenté dans les figures 14—16. Le mécanisme de bras, qui peut être monté dans une partie relativement courte du corps d'une sonde, tout en assurant la stabilité et l'excentrage souhaités grâce à un bras de support de patin de grande longueur, convient également généralement à une utilisation dans d'autres types de sondes excentrées.

L'agencement du mécanisme de bras dans le mode d'extension du patin est représenté dans la figure 14. Le bras 300 à l'extrémité duquel est monté le patin 302, qui peut par exemple être le patin 42 ou 210, est articulé sur la partie supérieure 304 du corps de sonde par un pivot 306. Le bras 300 comporte un prolongement intégral 308 du côté opposé au patin 302. Ce prolongement 308 est relié de façon élastique à la partie supérieure 304 du corps de sonde par une tige 310 qui travers un trou 312 formé dans une partie de paroi 314 solidaire de la partie du corps de sonde 304. La tige 310 comporte à une extrémité un pivot 316 et peut ainsi pivoter par rapport au bras 300. A son autre extrémité, la tige 310 porte un collier de butée 318 sur lequel prend appui un ressort de compression 320, dont l'autre extrémité est en butée sur la partie de paroi 314 solidaire de la partie de corps supérieure 304.

Le bras 300 est essentiellement constitué par le corps 322 d'un dispositif d'actionnement à simple effet commandé par les appareils de surface. Le dispositif d'actionnement peut fonctionner de façon à déplacer une tige d'actionnement 324 partant du dispositif d'actionnement, à proximité du pivot 306. Le dispositif d'actionnement peut être un vérin hydraulique ou électrique à simple effet, la tige 324 étant fixée à l'élément mobile du vérin. De tels dispositifs sont bien connus.

Le patin 302 est relié à une pièce d'extrémité 326 solidaire du corps 322 du dispositif d'actionnement par deux biellettes 328 et 330. La biellette supérieur 328 est articulée par un pivot 332 sur la pièce d'extrémité 326 et par un pivot 334 sur l'extrémité supérieure du patin 302. La biellette inférieure 330 est articulée par un pivot 336 sur la pièce d'extrémité 326 et son extrémité 338 peut coulisser dans une fente allongée 340 ménageé à l'arrière du patin 302. Un ressort à lame 341 est fixé sur la pièce d'extrémité 326 et est relié au patin en un point situé approximativement au milieu de l'arrière du patin 302. Le ressort 341 exerce une force élastique qui tend à appliquer le patin 302 contre la paroi du forage 12. Comme l'extrémité de la biellette 330 peut coulisser par rapport au patin 302, celui-ci est autorisé à pivoter de façon limitée autour du pivot 334 et ainsi, à s'écarter angulairement de l'axe du corps de sonde, de manière à s'adapter au mieux à la forme de la paroi du forage 12. Par ailleurs, le corps du dispositif d'actionnement 322 porte du côté extérieur un élément 342 formant saillie, destiné au contact avec la paroi du forage 12.

Le contre-bras 344 est monté pivotant sur la prolongement 308 du bras 300 par un pivot 346 et se prolonge au-delà du pivot 346 par une fourche 348 coulissant sur un têton 350 fixé sur la tige d'actionnement 324. Un ressort à lames 352 fixé sur la prolongement 308 du bras 300 se termine par un galet 354 qui peut rouler sur la surface intérieure du contre-bras 344, le contre-bras 344 étant de ce fait sollicité élastiquement pour s'écarter du corps de sonde.

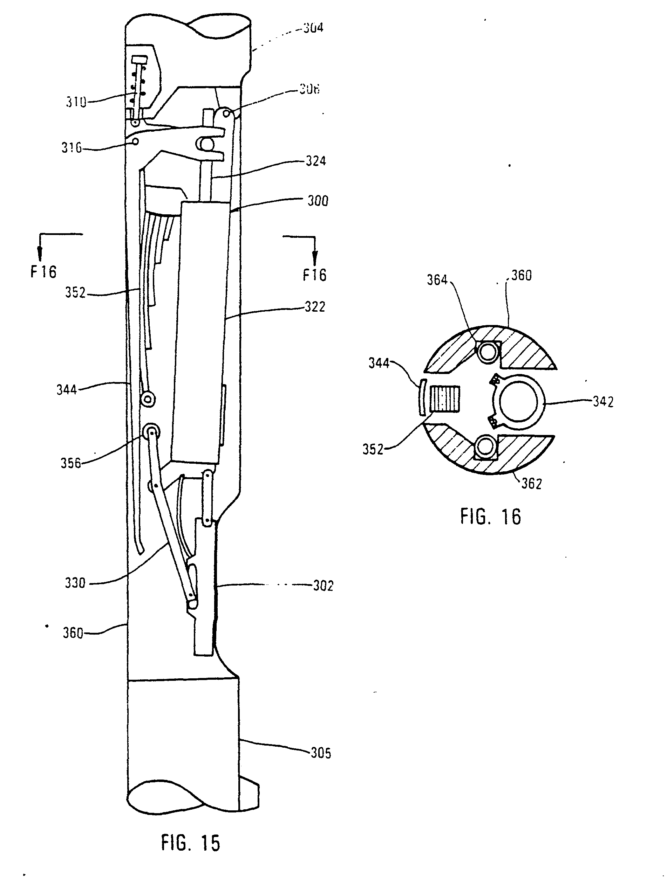

La portion inférieure de la partie 304 du corps de sonde est destinée à recevoir le patin 302, le bras 300 et le contre-bras 344 en position repliée, comme le montrent les figures 15 et 16. La portion inférieure de la partie 304 du corps de sonde comprend deux parois 360 et 362 séparées l'une de l'autre et munies d'encoches intérieures pour le passage de conducteurs 364.

Dans la position de la figure 14, où le patin 302 est en contact avec la paroi du forage 12, en vue de la mesure, le dispositif d'actionnement 322 n'est pas en mode de fonctionnement et la tige d'actionnement 324 est librement mobile par rapport au corps 322 du dispositif d'actionnement. La position de la tige 324 est liée á l'angle d'ouverture du contre-bras 344 qui est rappelé élastiquement en contact avec la paroi, et est par conséquent représentative du diamètre du forage 12. Un signal indicateur de ce diamètre est produit par le détecteur de déplacement (non représenté) associé à la tige 324, par exemple, un potientiomètre.

Du fait de la liaison élastique entre le bras 300 et le corps de sonde, réalisée par la tige 310, le corps de sonde est soumis à une force élastique qui a pour effet de l'excentrer par rapport à l'axe du forage 12 et à maintenir à une valeur faible et pratiquement constante la distance entre le corps de sonde et le patin 302.

Si l'on souhaite refermer le bras 302 et le contre-bras 344, on fait fonctionner le dispositif d'actionnement 322. La tige d'actionnement 324 se déplace de façon à faire pivoter le contre-bras 344 contre l'action du ressort 352. Le contre-bras 344 pivote vers l'intérieur jusqu'à venir en butée sur une roulette 366 montée à l'extrémité d'un prolongement de la biellette inférieure 330. Lorsque le contre-bras est ainsi en butée, la poursuite de déplacement de la tige 324 fait pivoter le bras 300 vers l'intérieur autour du pivot 306 jusque dans la position représentée sur la figure 15.

**Revendications**

1. Procédé pour fournir des signaux représentatifs de la résistivité d'une formation souterraine (14) traversée par un forage (12), du type dans lequel on émet des courants d'analyse en au moins trois points (56a—56c; 216a—216g) différents pratiquement situés sur la paroi du forage (12), on émet des courants supplémentaires pour focaliser ces courants d'analyse de façon à les faire pénétrer dans la formation (14), on reçoit les courants d'analyse et de focalisation émis, et on mesure lesdits courants d'analyse auxdits points respectifs (56a—56c; 216a—216g) de la paroi, caractérisé par le fait que lesdits points (56a—56c; 216a—216g) sont disposés selon la direction longitudinale du forage (12), et les courants d'analyse sont focalisés de façon différente par les courants supplémentaires respectifs, les mesures respectivement obtenues (96; 252) correspondant à des profondeurs d'investigation différentes.

2. Procédé selon la revendication 1, caractérisé en outre par le fait qu'il consiste à émettre un courant supplémentaire en des points situés dans le forage pour focaliser lesdits courants d'analyse pratiquement dans un plan radial passant par les points de la paroi d'où lesdits courants d'analyse sont émis.

3. Procédé selon l'une des revendications 1 et 2, caractérisé par le fait que l'on reçoit lesdits courants d'analyse et de focalisation en un point situé dans le forage, lesdits trois points (56a—56c; 216a—216g) étant à des distances respectivement croissantes dudit point de réception.

4. Procédé selon l'une des revendications 1 et 2, caractérisé par le fait que l'on reçoit lesdits courants d'analyse et de focalisation en un point situé sur la paroi du forage, lesdits points (56a—56c) étant à des distances respectivement croissantes dudit point de réception.

5. Procédé selon l'une des revendications 1 à 4, caractérisé par le fait que les courants d'analyse émis ont des caractéristiques de rapport signal sur bruit présélectionnées.

6. Procédé de diagraphie mettant en application le procédé selon la revendication 1, dans lequel on descend dans le forage (12) une sonde (32; 200) comportant un corps allongé et un patin de mesure (42; 210) prévu pour pouvoir en être écarté, on déplace cette sonde dans le forage, ledit patin étant en contact avec la paroi du forage par une surface électriquement conductrice (54; 212), on applique un premier potentiel à ladite surface conductrice, on applique un potentiel pratiquement égal audit premier potentiel à une première partie conductrice (34; 202) du corps de sonde, ladite première partie conductrice étant séparée d'une seconde partie conductrice (38; 206) du corps de sonde par une partie isolante (36; 204) du corps de sonde, et l'on mesure le courant provenant de ladite surface conductrice en au moins trois positions différentes (56a—56c; 216a—216g) de ladite surface conductrice, caractérisé par le fait que ladite surface conductrice et ledit corps de sonde sont agencés de telle manière que le courant provenant de la zone de ladite surface conductrice la plus proche de la seconde partie conductrice soit pratiquement non focalisé, alors que le courant provenant des autres zones de ladite surface conductrice est focalisé, et lesdites trois positions (56a—56c; 216a—216g) sont disposées selon la direction longitudinale de la surface conductrice.

7. Procédé selon la revendication 6, caractérisé par le fait que, lors du déplacement de ladite sonde dans le forage, ledit patin est en contact avec la paroi du forage par l'intermédiaire d'une surface de contact isolante (82; 214), adjacente à ladite surface conductrice (54).

8. Procédé selon la revendication 7, caractérisé par le fait qu'il est en outre prévu d'appliquer un second potentiel différent du premier à ladite seconde partie conductrice (38; 206).

9. Procédé selon la revendication 8, caractérisé par le fait qu'il est prévu en outre d'appliquer un potentiel, pratiquement égal audit second potentiel à une électrode de retour (84) située sur ladite surface de contact isolante (82).

10. Procédé selon l'une des revendications 7 à 9, caractérisé par le fait que le bord de ladite surface isolante (214) le plus proche de ladite seconde partie conductrice (206) est placé dans un plan qui coupe transversalement ledit corps de sonde à proximité de la jonction de la première partie conductrice (202) et de la partie isolante (204).

11. Procédé selon la revendication 10, caractérisé par le fait que ledit plan coupe la première partie conductrice (202) du corps de sonde.

12. Elément de contact (52; 210) avec la paroi d'un forage (12), tel qu'un patin, pour la mise en oeuvre du procédé selon la revendication 1, ledit élément de contact (52; 210) ayant une surface de contact avec la paroi comportant une partie conductrice (54; 212) et au moins trois électrodes de courant (56a—56c; 216a—216g) placées au même potentiel que la partie conductrice (54; 212), les courants émis par les électrodes étant focalisés par les courants émis par la partie conductrice (54, 212), caractérisé par le fait que les électrodes sont disposées en des points espacés le long de la partie conductrice (54; 212) et comprennent:

une première électrode de courant (56c; 216g) située dans une zone à haute densité de courant de ladite partie conductrice (54; 212);

une seconde électrode de courant (56a; 216a) située dans une zone à faible densité de courant de ladite partie conductrice (54; 212);

une troisième électrode de courant (56b; 216c) située dans une zone à densité de courant modérée de ladite partie conductrice (54; 212).

13. Elément de contact selon la revendication 12, caractérisé par le fait qu'il comprend une partie (84) pour le retour du courant.

14. Elément de contact selon la revendication 13, caractérisé par le fait que lorsque la distance par rapport audit retour augmente, lesdites électrodes (216a—216g) présentent respectivement une dimension longitudinale croissante et une dimension transversale décroissante.

15. Appareil de diagraphie pour la mise en oeuvre du procédé selon la revendication 6, du type comprenant:

un corps de sonde allongé, ledit corps comportant une première et une deuxième partie électriquement conductrices (34, 202; 38, 206) séparées par une partie isolante (36; 204);

un patin de mesure (42; 210, 302) déplaçable latéralement par rapport au corps pour venir en contact avec la paroi d'un forage (12), ledit patin comportant une surface électriquement conductrice (54; 212) et au moins trois électrodes de courant (56a—56c; 216a—216g), les courants émis par ces électrodes étant focalisés par ceux émis par la surface conductrice (54; 212);

des moyens (94) pour maintenir ladite surface conductrice (54; 112) et ladite première partie conductrice (34; 202) à des potentiels électriques pratiquement égaux;

des moyens (84, 38; 206) permettant le retour du courant émis par ladite première partie conductrice (34; 202) et ladite surface conductrice (54; 112);

caractérisé par le fait que les trois électrodes (56a—56c; 216a—216g) de courant sont disposées en des points espacés selon la direction longitudinale de ladite surface conductrice (54; 112), et ladite surface conductrice (54; 112) est maintenue au moins partiellement à l'intérieur d'un champ de courant émis par ladite partie conductrice (34; 202) de telle façon que la densité de courant de focalisation sur la surface conductrice (54; 112) varie selon sa direction longitudinale.

16. Appareil selon la revendication 15, caractérisé par le fait qu'il comprend en outre des moyens (310) pour maintenir ledit corps de sonde à une distance présélectionnée de la zone de la paroi du forage (14) en contact avec ladite surface du patin (302).

17. Appareil selon l'une des revendications 15 et 16, caractérisé par le fait que lesdites électrodes de courant sont centrées dans le plan longitudinal médian de ladite surface conductrice.

18. Appareil selon l'une des revendications 15 à 17, caractérisé par le fait qu'une desdites électrodes de courant (56a; 216a) est adjacente au bord de ladite surface conductrice le plus proche desdits moyens permettant le retour de courant.

19. Appareil selon l'une des revendications 15 à 18, caractérisé par le fait que lesdits moyens pour maintenir ladite surface conductrice au moins partiellement à l'intérieur dudit champ de courant incluent une surface isolante (82) appartenant à la surface du patin en contact avec la paroi du forage..

20. Appareil selon la revendication 19, caractérisé par le fait que lesdits moyens permettant le retour du courant émis par ladite première partie et ladite surface conductrice incluent:

ladite seconde partie conductrice (38), et
une électrode de retour de courant (84) située sur ladite surface isolante (82) du patin en contact avec la paroi du forage.

21. Appareil selon l'une des revendications 15 à 18, caractérisé par le fait que lesdites électrodes de courant (216a—216g) comprennent une série d'électrodes présentant une largeur décroissante et une longueur croissante à mesure qu'elles sont plus éloignées du bord de la surface conductrice le plus proche de ladite seconde partie conductrice.

22. Appareil selon l'une des revendications 15 à 18 et 21, caractérisé par le fait qu'il comporte en outre:

des moyens pour maintenir le bord de la surface conductrice le plus proche de la seconde partie conductrice (206) dans un plan qui coupe transversalement ledit corps de sonde à proximité de la jonction de ladite première partie conductrice (202) et de ladite partie isolante (204); et

des moyens (250) pour maintenir la seconde partie conductrice à un potentiel différent pour assurer le retour desdits courants.

23. Appareil selon la revendication 22, caractérisé par le fait que ledit patin comprend en outre une électrode de courant supplémentaire (224) adjacente au bord de la surface conductrice le plus éloigné de ladite seconde partie conductrice (206), en vue de détecter l'application longitudinale dudit patin sur la paroi du forage.

24. Appareil selon l'une des revendications 22 et 23, caractérisé par le fait que ledit patin comprend en outre une électrode de courant supplémentaire (226) située sur le côté de l'une desdites électrodes de courant, en vue de détecter l'application latérale dudit patin sur la paroi du forage.

25. Appareil selon l'une des revendications 22 à 24, caractérisé par le fait que les moyens pour maintenir ladite surface conductrice (212) au moins partiellement à l'intérieur du champ de courant incluent une surface isolante (214) appartenant à la surface du patin en contact avec la paroi du forage, ladite surface isolante s'étendant depuis la surface conductrice vers la seconde partie conductrice (206) et comportant une électrode de tension (228) associée à l'électrode de courant la plus proche pour tenir compte de la résistivité de la boue.

26. Appareil selon la revendication 25, caractérisé par le fait qu'une seconde électrode de tension (230) est située à côté de ladite électrode de tension (228).

## Patentansprüche

1. Verfahren zum Liefern von Signalen, die repräsentativ sind für den Widerstand einer unterirdischen, von einem Bohrloch (12) durchteuften Formation (14), bei welchem Verfahren man Analyseströme an mindestens drei unterschiedlichen Punkten (56a—56c; 216a—216g), die sich praktisch auf der Wandung (12) befinden, aussendet, man zusätzliche Ströme zum Fokalisieren dieser Analyseströme derart aussendet, daß man sie in die Formation (14) einbringen läßt, man die ausgesandten Analyseströme und Fokalisationsströme empfängt, und man die genannten Analyseströme an den jeweiligen Punkten (56a—56c; 216a—216g) der Wandung mißt, dadurch gekennzeichnet, daß die genannten Punkte (56a—56c; 216a—216g) in Längsrichtung des Bohrlochs (12) angeordnet sind und die Analyseströme durch die zusätzlichen zugeordneten Ströme unterschiedlich fokalisiert werden, wobei die entsprechenden erhaltenen Messungen (96; 252) unterschiedlichen Untersuchungstiefen entsprechen.

2. Verfahren nach Anspruch 1, dadurch gekennzeichnet, daß es darin besteht, einen zusätzlichen Strom an Punkten auszusenden, die in dem Bohrloch vorliegen, um die genannten Analyseströme praktisch in einer Radialebene zu fokalisieren, welche durch die Wandungspunkte verläuft, wo die genannten Analyseströme ausgesandt werden.

3. Verfahren nach einem der Ansprüche 1 und 2, dadurch gekennzeichnet, daß man die genannten Analyseströme und Fokalisationsströme an einem Punkt in dem Bohrloch empfängt, wobei die genannten drei Punkte (56a—56c; 216a—216g) in entsprechenden zunehmenden Abständen von dem genannten Empfangspunkt liegen.

4. Verfahren nach einem der Ansprüche 1 und 2, dadurch gekennzeichnet, daß man die genannten Analyseströme und Fokalisationsströme an einem Punkt empfängt, der auf der Bohrlochwandung liegt, wobei die genannten Punkte (56a—56c) sich in entsprechenden zunehmenden Abständen von dem genannten Empfangspunkt befinden.

5. Verfahren nach einem der Ansprüche 1 bis 4, dadurch gekennzeichnet, daß die ausgesandten Analyseströme vorgegebene Kennwerte des Signal-Rausch-Verhältnisses aufweisen.

6. Diagraphie-Verfahren unter Anwendung des Verfahrens nach Anspruch 1, bei welchem man in das Bohrloch (12) eine Sonde (32; 200) mit einem langgestreckten Körper und einem abspreizbaren Meßschuh (42; 210) absenkt, diese Sonde in dem Bohrloch verlagert, wobei der Schuh in Kontakt mit der Wandung des Bohrlochs über eine elektrisch leitende Oberfläche (54; 212) steht, man ein erstes Potential an die genannte leitende Oberfläche anlegt, ein praktisch dem ersten Potential gleiches Potential an eine erste leitende Partie (34; 202) des Sondenkörpers anlegt, wobei die genannte erste leitende Partie von einer zweiten leitenden Partie (38; 206) des Sondenkörpers durch eine isolierende Partie (36; 204) des Sondenkörpers getrennt ist, und man den Strom mißt, der von der genannten leitenden Oberfläche an mindestens drei unterschiedlichen Positionen (56a—56c; 216a—216g) der ganannten leitenden Oberfläche ausgeht, dadurch gekennzeichnet, daß die genannte leitende Oberfläche und der genannte Sondenkörper derart ausgebildet sind, daß der von der Zone der leitenden Oberfläche ausgehende Strom, die der zweiten leitenden Partie am nächsten ist, praktisch nicht fokalisiert ist, während der aus anderen Zonen der genannten leitenden Oberfläche austretende Strom fokalisiert ist und die genannten drei Positionen (56a—56c; 216a—216g) längs der Längsrichtung der leitenden Oberfläche angeordnet sind.

7. Verfahren nach Anspruch 6, dadurch gekennzeichnet, daß während der Verlagerung der genannten Sonde in dem Bohrloch der genannte Schuh in Kontakt mit der Bohrlochwandung über eine isolierende Kontaktfläche (82; 214) nahe der genannten leitenden Oberfläche (54) steht.

8. Verfahren nach Anspruch 7, dadurch gekennzeichnet, daß ferner vorgesehen ist, ein zweites vom ersten unterschiedliches Potential an die genannte zweite leitende Partie (38; 206) anzulegen.

9. Verfahren nach Anspruch 8, dadurch gekennzeichnet, daß ferner vorgesehen ist, ein Potential praktisch gleich dem zweiten Potential an eine Rücklaufelektrode (84) anzulegen, die auf der genannten isolierenden Kontaktfläche (82) angeordnet ist.

10. Verfahren nach einem der Ansprüche 7 bis 9, dadurch gekennzeichnet, daß der Rand der genannten isolierenden Fläche (214), der der genannten zweiten leitenden Partie (206) am nächsten liegt, in einer Ebene plaziert ist, die den genannten Sondenkörper nahe der Verbindung der ersten leitenden Partie (202) und der isolierenden Partie (204) transversal schneidet.

11. Verfahren nach Anspruch 10, dadurch gekennzeichnet, daß die genannte Ebene die erste leitende Partie des Sondenkörpers schneidet.

12. Element (52; 210) für den Kontakt mit der Wandung eines Bohrlochs (12), wei ein Schuh, für die Durchführung des Verfahrens nach Anspruch 1, welches Kontaktelement (52; 210) eine Kontaktfläche mit der Wandung aufweist, die eine leitende Partie (54; 212) und mindestens drei Stromelektroden (56a—56c; 216a—216g) umfaßt, plaziert auf demselben Potential wie die leitende Partie (54, 212), wobei die von den Elektroden ausgesandten Ströme fokalisiert werden durch Ströme, ausgesandt von der leitenden Partie (54; 212), dadurch gekennzeichnet, daß die Elektroden an Punkten angeordnet sind, die im Abstand in Richtung der Länge der leitenden Partie (54; 212) liegen und umfassen:

eine erste Stromelektrode (56c; 216g), angeordnet in einer Zone hoher Stromdichte der genannten leitenden Partie (54; 212);

eine zweite Stromelektrode (56a, 216a), angeordnet in einer Zone geringer Stromdichte der genannten leitenden Partie (54; 212);

eine dritte Stromelektrode (56b; 216c), angeordnet in einer Zone mäßiger Stromdichte der genannten leitenden Partie (54; 212).

13. Kontaktelement nach Anspruch 12, dadurch gekennzeichnet, daß es eine Partie (84) für den Stromrücklauf umfaßt.

14. Kontaktelement nach Anspruch 13, dadurch gekennzeichnet, daß mit zunehmendem Abstand von der Rücklaufelektrode die genannten Elektroden (216a—216g) jeweils eine zunehmende Längsabmessung und eine abnehmende Querabmessung aufweisen.

15. Diagraphie-Apparat für die Durchführung des Verfahrens nach Anspruch 6 der Bauart, die umfaßt:

einen langgestreckten Sondenkörper mit einer ersten und einer zweiten elektrisch leitenden Partie (34, 202; 38, 206), voneinander durch eine isolierende Partie (36; 204) getrennt;

einen seitlich relativ zum Sondenkörper verlagerbaren Maßschuh (42; 210, 302) für das Inkontakttreten mit der Wandung eines Bohrlochs (12), welcher Schuh eine elektrisch leitende Oberfläche (54; 212) und mindestens drei Stromelektroden (56a—56c; 216a—216g) aufweist, wobei die von diesen Elektroden ausgesandten Ströme durch jene von der leitenden Oberfläche (54; 212) fokalisiert werden;

Mittel (94) für das Halten der genannten leitenden Oberfläche (54; 212) und der genannten ersten leitenden Partie (34; 202) auf praktisch gleichen elektrischen Potentialen;

Mittel (84, 38; 206), die den Rücklauf des Stromes ermöglichen, ausgesandt von der genannten ersten leitenden Partie (34; 202) und der genannten leitenden Oberfläche (54; 112);

dadurch gekennzeichnet, daß die drei Stromelektroden (56a—56c; 216a—216g) an Punkten angeordnet sind, die im Abstand in Längsrichtung der genannten leitenden Oberfläche (54; 112) liegen und die genannte leitende Oberfläche (54; 112) mindestens teilweise im Inneren eines Stromfeldes gehalten ist, ausgesandt von der genannten leitenden Partie (34; 202) derart, daß die Dichte des Fokalisationsstromes auf der leitenden Oberfläche (54; 112) sich in ihrer Längsrichtung ändert.

16. Apparat nach Anspruch 15, dadurch gekennzeichnet, daß er ferner Mittel (310) umfaßt für das Halten des Sonderkörpers in einem vorgewählten Abstand von der Zone der Wandung des Bohrlochs (14) in Kontakt mit der genannten Oberfläche des Schuhs (302).

17. Apparat nach einem der Ansprüche 15 und 16, dadurch gekennzeichnet, daß die genannten Stromelektroden in der Längsmittelebene der genannten leitenden Oberfläche zentriert sind.

18. Apparat nach einem der Ansprüche 15 bis 17, dadurch gekennzeichnet, daß eine der genannten Stromelektroden (56a; 216a) nahe dem Rand der genannten leitenden Oberfläche angeordnet ist, welcher am nächsten den genannten Mitteln für den Stromrücklauf ist.

19. Apparat nach einem der Ansprüche 15 bis 18, dadurch gekennzeichnet, daß die genannten Mittel zum Halten der genannten leitenden Oberfläche mindestens teilweise im Inneren des genannten Stromfeldes eine isolierende Oberfläche (82) umfassen, die zu der Oberfläche des Schuhs in Kontakt mit der Bohrlochwandung gehört.

20. Apparat nach Anspruch 19, dadurch gekennzeichnet, daß die genannten Mittel, welche den Rücklauf des Stromes ermöglichen, ausgesandt von der genannten ersten Partie und der genannten leitenden Oberfläche umfassen;

die genannte zweite leitende Partie (38), und

eine Stromrücklaufelektrode (84), angeordnet auf der genannten isolierenden Oberfläche (82) des Schuhs in Kontakt mit der Bohrlochwandung.

21. Apparat nach einem der Ansprüche 15 bis 18, dadurch gekennzeichnet, daß die genannten Stromelektroden (216a—216g) eine Serie von Elektroden umfassen, mit einer abnehmenden Breite und mit einer zunehmenden Länge, jenachdem wieviel weiter entfernt sie von dem Rand der leitenden Oberfläche sind, der der genannten zweiten leitenden Partie am nächsten ist.

22. Apparat nach einem der Ansprüche 15 bis 18 und 21, dadurch gekennzeichnet, daß er ferner umfaßt:

Mittel zum Halten des Randes der leitenden Oberfläche, der der zweiten leitenden Partie (206) am nächsten liegt, in einer Ebene, die den Sondenkörper nahe der Stoßstelle der genannten ersten leitenden Partie (202) und der genannten isolierenden Partie (204) quer durchsetzt, und

Mittel (250) zum Halten der zweiten leitenden Partie auf einem unterschiedlichen Potential zum Sicherstellen des Rücklaufs der genannten Ströme.

23. Apparat nach Anspruch 22, dadurch gekennzeichnet, daß der genannte Schuh ferner eine Zusatzstromelektrode (224) nahe dem Rand der leitenden Oberfläche umfaßt, der am weitesten von der genannten zweiten leitenden Partie (206) entfernt ist zwecks Erfassung des Längsanliegens des Schuhs an der Bohrlochwandung.

24. Apparat nach einem der Ansprüche 22 und 23, dadurch gekennzeichnet, daß der genannte Schuh ferner eine Zusatzstromelektrode (226) aufweist, angeordnet auf der Seite einer der genannten Stromelektroden zwecks Erfassung der seitlichen Anlage des Schuhs an der Bohrlochwandung.

25. Apparat nach einem der Ansprüche 22 bis 24, dadurch gekennzeichnet, daß die Mittel zum Halten der genannten leitenden Oberfläche (212) mindestens teilweise im Inneren eines Stromfeldes eine isolierende Oberfläche (214) umfassen, zugehörig der Oberfläche des Schuhs in Kontakt mit der Bohrlochwandung, wobei die genannte isolierende Oberfläche sich von der leitenden Oberfläche in Richtung der zweiten leitenden Partie (206) erstreckt und eine Spannungselektrode (228) umfaßt, zugeordnet der nächstliegenden Stromelektrode zwecks Berücksichtigung des Bohrschlammwiderstandes.

26. Apparat nach Anspruch 25, dadurch gekennzeichnet, daß eine zweite Spannungselektrode (230) sich seitlich der genannten Spannungselektrode (228) befindet.

**Claims**

1. A method for providing signals representative of the resistivity of a subsurface formation (14) traversed by a borehole (12), of the type comprising the steps of: emitting survey currents from at least three different locations (56a—56c; 216a—216g) substantially on the wall of the borehole (12), emitting additional currents to focus said survey currents and force them into the formation (14), receiving the emitted survey and focusing currents, and measuring the survey currents at said respective wall locations (56a—56c; 216a—216g), characterized in that said locations (56a—56c; 216a—216g) are disposed along the longitudinal direction of the borehole (12), and the survey currents are differently focused by the respective additional currents, the measurements respectively obtained (96; 252) corresponding to different depths of investigation.

2. A method according to claim 1, characterized in that it further comprises the step of emitting an additional current from locations in the borehole to focus said survey currents essentially in a radial plane intersecting the wall locations at which said survey currents are emitted.

3. A method according to any one of claims 1 and 2, characterized by receiving said survey and focusing currents at a location in the borehole, said three locations (56a—56c) being at respectively greater distances from said receiving location.

4. A method according to any one of claims 1 and 2, characterized by receiving said survey and focusing currents at a location on the borehole wall, said locations (56a—56c) being at respectively greater distances from said receiving location.

5. A method according to any one of claims 1 to 4, characterized in that said emitted survey currents have preselected signal-to-noise characteristics.

6. A well logging method applying the method of claim 1, comprising the steps of: lowering into the borehole (12) a sonde (32; 200) having an elongate body and a measuring pad (42; 210) adapted for lateral extension therefrom, moving said sonde through the borehole with said pad in engagement with the borehole wall along an electrically conductive face (54; 212), applying a first potential to said conductive face, applying a potential substantially equal to said first potential to a first conductive section (34; 202) of the sonde body, said first conductive body section being separated by an insulating section (36; 204) of the sonde body from a second conductive body section (38; 206), and measuring the current flow from said conductive face at at least three different locations (56a—56c; 216a—216g) of said conductive face, characterized in that said conductive face and said sonde body are arranged such that the current flowing from an area of said conductive face nearest said second conductive section is substantially unfocused, while the current flowing from other areas of said conductive face is focused, and said three locations (56a—56c; 216a—216g) are disposed along the longitudinal direction of the conductive face.

7. A method according to claim 6, characterized in that, during the movement of the sonde through the borehole, said pad is in engagement with the borehole wall along an insulated engaging face (82; 214) contiguous to said conductive face (54).

8. A method according to claim 7, characterized in that it further comprises applying a second potential different from first potential to said second conductive section (38; 206).

9. A method according to claim 8, characterized in that it further comprises applying a potential substantially equal to said second potential to a return electrode (84) located on the engaging insulating face (82).

10. A method according to any one of claims 7 to 9, characterized in that the edge of the insulating face (214) nearest said second conductive section (206) is set in a plane transversely intersecting said sonde body proximate to the juncture of the first conductive section (202) and the insulating section (204). 11. A method according to claim 10, characterized in that said plane intersects said first conductive section (202) of the sonde body.

12. A borehole (12) wall engaging member (52; 210), such as a pad, for implementing the method according to claim 1, said engaging member (52; 210) having a wall engaging face comprising a conductive section (54; 212) and at least three current electrodes (56a—56c; 216a—216g) set at the same potential as the conductive section (54; 212), the currents emitted by the electrodes being focused by the currents emitted by the conductive section (54; 212), characterized in that the electrodes are disposed at spaced out locations along the conductive face (54; 212) and comprise:

a first current electrode (56c; 216g) located in a high current density region of said conductive section (54; 212);

a second current electrode (56a; 216a) located in a low current density region of said conductive section (54; 212); and

a third current electrode (56b; 216c) located in a moderate current density region of said conductive section (54; 212).

13. An engaging member according to claim 12, characterized in that it comprises a current return section (84).

14. A wall engaging member according to claim 13, characterized in that with increasing distance from said current return, said current electrodes (216a—216g) respectively have an increasing longitudinal dimension and a decreasing transverse dimension.

15. A logging apparatus for implementing the method according to claim 6, of the type comprising:

an elongate sonde body, said body including a first and a second electrically conductive section (34, 202; 38, 206) separated by an insulating section (36; 204);

a measuring pad (42; 210, 302) adapted for lateral extension from said body into engagement with the wall of a borehole (12), said pad having an electrically conductive face (54; 212) and at least three current electrodes (56a—56c; 216a—216g), the currents emitted by these electrodes being focused by those emitted by the conductive section (54; 212);

means (94) for maintaining said conductive face (54; 212) and said first conductive section (34; 202) at substantially equal electrical potentials; and

means (84, 38; 206) for returning current emitted from said first conductive section (34; 202) and said conductive face (54, 112);

characterized in that the three current electrodes (56a—56c; 216a—216g) are disposed at spaced out locations along the longitudinal direction of said conductive face (54; 112), and said conductive face (54; 112) is maintained at least partially within a current field emitted from said conductive section (34; 202) so that the density of the focusing current on the conductive section (54; 112) varies along its longitudinal direction.

16. An apparatus according to claim 15, characterized in that it further comprises means (310) for maintaining said sonde body at a preselected distance from the area of the borehole (14) wall engaged with said pad (302).

17. An apparatus according to any one of claims 15 and 16, characterized in that said current electrodes are centered on the longitudinal median plane of said conductive face.

18. An apparatus according to any one of claims 15 to 17, characterized in that one of said current electrodes (56a; 216a) is located adjacent the edge of said conductive face nearest said current return means.

19. An apparatus according to any one of claims 15 to 18, characterized in that said means for maintaining said conductive face at least partially within said current field include an insulating face (82) belonging to the face of the pad in engagement with the borehole wall.

20. An apparatus according to claim 19, characterized in that said means for returning current emitted from said first section and said conductive face include:

said second conductive section (38), and

a current return electrode (84) located on said insulating face of the pad in engagement with the borehole wall.

21. An apparatus according to any one of claims 15 to 18, characterized in that said current electrodes (216a—216g) comprise a series of electrodes having a decreasing width and an increasing length as their respective distance from the edge of said conductive face nearest said second conductive section increases.

22. An apparatus according to any one of claims 15 to 18 and 21, characterized in that it further comprises:

means for maintaining the edge of said conductive face nearest said second conductive section (206) in a plane transversely intersecting said sonde body proximate to the juncture of said first conductive section (202) and said insulating section (204), and

means (250) for maintaining second conductive section at a different potential for returning said currents.

23. An apparatus according to claim 22, characterized in that said pad further comprises an additional current electrode (224) located adjacent the edge of said conductive face most remote from said second conductive section (206) for detecting the longitudinal application of said pad to the borehole wall.

24. An apparatus according to any one of claims 22 and 23, characterized in that said pad further comprises an additional current electrode (226) located laterally of one of said current electrodes for detecting the lateral application of said pad to the borehole wall.

25. An apparatus according to any one of claims 22 to 24, characterized in that said means for maintaining said conductive face (212) at least partially within said current field include an insulating face (214) belonging to the surface of the pad in engagement with the borehole wall, said insulating face extending from said conductive face toward said second conductive section (206) and having a potential electrode (228) associated with the nearest current electrode for taking into account the mud resistivity.

26. An apparatus according to claim 25, characterized in that a second potential electrode (230) is located next to said potential electrode (228).

REPARTITION RADIALE DES RESISTIVITES
$(R_{mf} \gg R_w$. LIT AQUIFERE)

FIG. 1

FIG. 6

1

EP 0 131 516 B1

FIG. 2

2

FIG. 3

FIG. 4

GENERATEUR DE SIGNAUX 94

FIG. 5

FIG. 7

FIG. 8

FIG. 9

FIG. 10

FIG. 13

EP 0 131 516 B1

FIG. 11

FIG. 12

FIG. 14

FIG. 15

FIG. 16